# EUROPÄISCHE PATENTSCHRIFT

(11) **EP 0 771 444 B1**
(45) Veröffentlichungstag und Bekanntmachung des Hinweises auf die Patenterteilung: **17.02.1999**
(21) Anmeldenummer: 95924185.2
(22) Anmeldetag: 11.07.1995
(51) Int. Cl.: G06F 9/46

(54) **VERFAHREN ZUR STEUERUNG VON TECHNISCHEN VORGÄNGEN ODER PROZESSEN**
METHOD FOR CONTROLLING TECHNICAL OPERATIONS OR PROCESSES
PROCEDE DE COMMANDE D'OPERATIONS OU DE PROCESSUS TECHNIQUES

(30) Priorität: 19.07.1994 DE 4425431; 14.01.1995 DE 19500957
(43) Veröffentlichungstag der Anmeldung: 07.05.1997
(73) Patentinhaber: ROBERT BOSCH GMBH, 70442 Stuttgart (DE)
(72) Erfinder: HOENNINGER, Harald, D-79114 Freiburg (DE); MOCKEN, Thomas, D-74321 Bietigheim-Bissingen (DE); SCHIEMANN, Juergen, D-71706 Markgroeningen (DE)
(86) Internationale Anmeldenummer: DE9500903
(87) Internationale Veröffentlichungsnummer: WO9602883

(56) Entgegenhaltungen:
- EP-A- 0 332 148
- US-A- 4 954 948

## Beschreibung

### Stand der Technik

Die Erfindung geht aus von einem Verfahren nach der Gattung des Hauptanspruchs. Es ist schon ein gattungsgemäßes Verfahren aus dem Artikel von Bernd Ackermann, "Anforderungen an ein Echtzeit-Betriebssystem für "eingebettete systeme", Elektronik Nr. 18, 1992, S. 120-128 bekannt. Darin werden wichtige Merkmale von Echtzeit-Betriebssystemen für Mikrorechner enthaltende Steuergeräte erläutert. Für die Ablaufsteuerung ist ein als Prozeßmanager bezeichnetes Programm verantwortlich. Dieses steuert die Vergabe der CPU und koordiniert alle ablaufenden Aufgabenprogramme (Tasks). Der Prozeßmanager erlaubt die quasi parallele Abarbeitung mehrerer Aufgabenprogramme (Multitasking). Hierzu ist der Prozeßmanager so ausgelegt, daß er ein gerade in Abarbeitung befindliches (rechnendes) Programm jederzeit unterbrechen und ein Aufgabenprogramm, dessen Abarbeitung für das gesamte System momentan wichtiger (höher prior) ist, starten kann. Das unterbrochene Programm wird von dem Prozeßmanager an der unterbrochenen Stelle fortgesetzt, wenn die Abarbeitung von höherprioren Programmen beendet ist. Es wird als wesentlich bei dieser Art der Ablaufsteuerung bezeichnet, daß ein gerade rechnendes Aufgabenprogramm jederzeit unterbrochen werden kann. Diese Vorgehensweise wird auch als "preemptives Scheduling oder preemptives Multitasking" bezeichnet.

Die beschriebene Ablaufsteuerung ist insbesondere für Echtzeit-Systeme, d.h. für Steuersysteme, die bestimmte Steuervorgänge innerhalb von vorgegebenen Zeitgrenzen vorgenommen haben müssen, interessant, da damit eine schnelle Reaktion auf bestimmte Ereignisse möglich ist.

Dadurch, daß ein Aufgabenprogramm an jeder beliebigen Stelle unterbrochen werden kann, entsteht jedoch ein großer Verwaltungs- und Speicheraufwand. Da ein unterbrochenes Aufgabenprogramm später an der unterbrochenen Stelle fortgesetzt werden soll, muß für das unterbrochene Aufgabenprogramm eine Anzahl von den Abarbeitungszustand kennzeichnenden Informationen in einem Stapelspeicher abgespeichert werden. Hierzu gehören der Programmzählerstand, der Inhalt der Statusregister, der Inhalt der Rechenregister usw.. Zudem müssen die auf dem Stapelspeicher abgelegten temporären Daten des unterbrochenen Aufgabenprogramms erhalten bleiben, während für temporäre Daten des unterbrechenden Aufgabenprogramms zusätzlicher Platz auf dem Stapelspeicher reserviert werden muß. Da in der Ablaufsteuerung durchaus auch mehrfach verschachtelte Unterbrechungen auftreten können, ist der Speicherbedarf für den Stapelspeicher bei diesem Verfahren entsprechend hoch.

Schwierig ist auch der Austausch von Informationen zwischen unterbrochenen und unterbrechenden Aufgabenprogrammen. Greifen beide Aufgabenprogramme zu diesem Zweck auf gemeinsame Speicherbereiche zu, so kann es in einigen Fällen je nach Lage der Unterbrechungsstelle zu Datenverlusten oder Datenverfälschungen kommen. Diese Fälle sind in der Praxis oft schwer zu erkennen, ihre Absicherung erfordert aufwendige Verfahren zur Synchronisation der Datenzugriffe. Alternativ können getrennte Speicherbereiche verwendet werden. Dann müssen Kommunikationsmechanismen bereitgestellt werden, die ebenfalls aufwendig sind.

Aus der US 49 54 948 ist ein Verfahren zur Abarbeitung eines Steuerprogramms bekannt, wobei das Steuerprogramm in einzelne Aufgabenprogramme und die einzelnen Aufgabenprogramme in Teilaufgabenprogramme unterteilt sind. Bei der Bearbeitung jedes Teilaufgabenprogrammes wird zunächst ein Pointer inkrementiert, dann das Teilaufgabenprogramm ausgeführt auf das der Pointer zeigt und danach abgefragt, ob ein Timer abgelaufen ist. Wenn der Timer noch nicht abgelaufen ist, wird der Pointer auf das nächste abzuarbeitende Teilaufgabenprogramm gestellt und die Bearbeitung fortgesetzt. Zwischen den jeweiligen Teilaufgabenprogrammen können jeweils hochpriorige andere Aufgaben ausgeführt werden. Die Abfolge der jeweiligen Aufgabenprogramme ist jedoch fest vorgegeben und wird nicht durch eine Priorität der einzelnen Aufgabenprogramme bestimmt.

### Vorteile der Erfindung

Das erfindungsgemäße Verfahren mit den kennzeichnenden Merkmalen des Hauptanspruchs hat demgegenüber den Vorteil, daß die Flexibilität der Bearbeitung erhöht wird, ohne daß der Verwaltungs- und Speicheraufwand für Unterbrechungen von Aufgabenprogrammen beträchtlich vergrößert wird. Dadurch, daß Aufgabenprogramme aus einem festgelegten Prioritätsbereich in Teilaufgabenprogramme unterteilt werden, die für Aufgabenprogramme des gleichen Prioritätsbereichs ununterbrechbar sind und somit gegenseitige Unterbrechungen der Aufgabenprogramme nur zwischen den Teilaufgabenprogrammen stattfinden können, muß bei solchen Unterbrechungen nur noch wenig Information im Stapelspeicher abgelegt werden. Der Speicherbedarf für diese Information ist unabhängig von der Anzahl der in den Teilaufgabenprogrammen verwendeten temporären Stapelspeicher-Variablen und der Schachtelungstiefe der Unterbrechungen und damit insbesondere unabhängig von der Anzahl der Prioritätsebenen des betreffenden Prioritätsbereichs. Der Speicherbedarf für den Stapelspeicher ist somit geringer als beim Verfahren des preemptiven Multitaskings.

Das Verfahren, mehrere Aufgabenprogramme quasi parallel abzuarbeiten und dabei Unterbrechungen von niedrigerprioren Aufgabenprogrammen durch höherpriore nur an bestimmten, vom Anwender bei der Erstellung des Programms festgelegten Programmstellen zuzulassen, wird kooperatives Multitasking genannt. Es zeigt sich in der Praxis, daß viele Aufgabenprogramme in einem Gesamtsteuerprogramm im kooperativen Multitasking abgearbeitet werden können mit geringem Aufwand an Speicher- und Rechenzeit, während das aufwendigere preemptive Multitasking auf wenige hochpriore Aufgabenprogramme beschränkt werden kann.

Das beim preemptiven Multitasking auftretende Problem des möglichen Datenverlustes beim Zugriff auf gemeinsame Speicherbereiche ist entschärft. Eine Unterbrechung eines Zugriffs auf Daten, auf die auch das unterbrechende Aufgabenprogramm zugreift, ist beim kooperativen Multitasking nicht mehr möglich, da der Zugriff innerhalb des nicht unterbrechbaren Teilaufgabenprogramms vollständig abgearbeitet wird, d.h. die Datenzugriffe sind nun automatisch korrekt synchronisiert. Aus gleichem Grund entfällt auch das Problem nicht abschrankbarer Prioritätsumkehr, das sich im preemptiven System ergibt, wenn ein Aufgabenprogramm beim Zugriff auf eine nur unter gegenseitigem Ausschluß zugreifbare Ressource blockiert wird, weil diese bereits von einem unterbrochenen niederprioren Aufgabenprogramm belegt ist. Die Auswirkungen von Aufgabenprogrammunterbrechungen sind damit transparent und einfach nachvollziehbar. Dies ist insbesondere auch für die Programmierung der Aufgabenprogramme in höheren Programmiersprachen von Vorteil, da es einem Hochsprachenkonstrukt im allgemeinen nicht anzusehen ist, ob es eine ununterbrechbare Operation darstellt oder nicht.

Es ergeben sich weiterhin Vorteile für die Entwicklungsphase eines Steuergeräts. Es kann insbesondere das komplexe Steuerprogramm einfacher simuliert werden. Im Gegensatz zum preemptiven Multitasking kann bei dem erfindungsgemäßen Verfahren weitgehend der zeitliche Ablauf der Programmabarbeitung und insbesondere die Auswirkungen der Unterbrechungen simuliert werden, ohne daß das Verhalten des Rechners selbst simuliert werden muß. Dazu muß für jedes Teilaufgabenprogramm neben der Funktion auch noch eine Laufzeit spezifiziert werden.

Durch die in den Unteransprüchen aufgeführten Maßnahmen sind vorteilhafte Weiterbildungen und Verbesserungen des im Hauptanspruch angegebenen Verfahrens möglich. So ist es vorteilhaft, daß die Aufgabenprogramme aus Folgen von Teilaufgabenprogrammen bestehen, die nach Ablaufgesichtspunkten zusammengestellt sind, wobei als Ablaufgesichtspunkte der Anlaß der Anforderung auf Aufgabenprogrammabarbeitung (Aktivierungsereignis), die damit verbundene Dringlichkeit (Priorität) sowie Synchronisationsbedingungen zwischen den Teilaufgabenprogrammen berücksichtigt werden. Die Konfiguration vieler unterschiedlicher Teilaufgabenprogramme nach Ablaufgesichtspunkten in Abarbeitungssequenzen, die wenigen Aufgabenprogrammen mit zugehöriger Priorität und Abarbeitungsanlaß zugeordnet werden, verringert zudem den Laufzeitbedarf für die betriebssysteminterne Ablaufsteuerung, die die Abarbeitung der konkurrierenden Teilaufgabenprogramme zu koordinieren hat. Ein wesentlicher Anteil der Information zur Ablaufsteuerung wird so bereits bei der Programmerstellung zur Verfügung gestellt und muß nicht zur Laufzeit rechenzeitaufwendig ermittelt werden. Die Aufteilung des komplexen Steuergeräteprogramms in Teilaufgabenprogramme erfolgt dagegen nach funktionalen Gesichtspunkten. Dies erhöht die Übersichtlichkeit und vereinfacht die Programmerstellung und Programmverwaltung.

Weiterhin vorteilhaft ist, daß jedes Teilaufgabenprogramm nur so umfangreich gestaltet wird, daß die Zeit für die Abarbeitung des Teilaufgabenprogramms durch den Mikrorechner eine vorbestimmte Grenze nicht überschreitet. Diese Maßnahme bewirkt, daß das Verfahren innerhalb der genannten Zeitgrenze auch für Steuervorgänge einsetzbar ist, bei denen harte Echtzeit-Bedingungen zu berücksichtigen sind. Der Aufruf eines aktivierten höherprioren Aufgabenprogramms kann sich dann maximal um die maximale Abarbeitungszeit eines Teilaufgabenprogramms vermehrt um die Abarbeitungszeit eventuell unterbrechender Interruptprogramme verzögern.

Die Maßnahmen gemäß Anspruch 4 erlauben es, zur Laufzeit auf einfache Weise die Abarbeitungsreihenfolge der Teilaufgabenprogramme zu ändern. Hierzu braucht lediglich der Tabellenzeiger mit der Adresse eines Teilaufgabenprogrammzeigers aus einer Teilaufgabenprogrammzeigertabelle geladen werden, wodurch das durch diesen Teilaufgabenprogrammzeiger selektierte Teilaufgabenprogramm beim nächsten Teilaufgabenprogrammwechsel aufgerufen wird. Auch Wechsel zwischen Aufgabenprogrammen werden so einfach realisiert, indem der Tabellenzeiger mit der Adresse des ersten Teilaufgabenprogrammzeigers aus der zugehörigen Teilaufgabenprogrammzeigertabelle des Aufgabenprogramms geladen wird.

Die Einführung einer beschreibenden Datenstruktur für ein Aufgabenprogramm (Aufgabenprogrammdeskriptor) gemäß Anspruch 6 bietet den Vorteil, daß ein Aufgabenprogramm mit der Adresse einer beschreibenden Datenstruktur eindeutig identifiziert werden kann und letztere einen einfachen und schnellen Zugriff auf alle wichtigen Informationen über dieses Aufgabenprogramm und seinen Abarbeitungszustand (Status) gestattet.

Ebenfalls vorteilhaft ist, wenn der Status des jeweiligen Aufgabenprogramms nur durch einen der drei Fälle: "Ruhend"; "rechenbereit" und "rechnend" gekennzeichnet werden kann. Insbesondere dadurch, daß es keinen Zustand "blockiert" für ein Aufgabenprogramm gibt, werden vielfältige Probleme von bekannten Betriebssystemen vermieden. Der Zustand "blockiert" wird von einem Aufgabenprogramm dann eingenommen, wenn das Aufgabenprogramm auf die Erfüllung einer bestimmten Bedingung wartet. Als Beispiel hierfür sei das Warten auf bestimmte Rechenergebnisse anderer Aufgabenprogramme genannt. Wenn die Rechenergebnisse noch nicht vorliegen, wird bei den betreffenden Betriebssystemen dem wartenden Aufgabenprogramm der Zustand "blockiert" zugewiesen. Die Abarbeitung dieses Aufgabenprogramms ist dann erstmal gestoppt. Es muß ein anderes Aufgabenprogramm und zwar eines welches ggf. eine geringere Priorität aufweist, verarbeitet werden. Erst wenn die bestimmte Bedingung erfüllt ist, z.B. die geforderten Rechenergebnisse durch Abarbeitung eines anderen Aufgabenprogramms zur Verfügung gestellt sind, kann das Betriebssystem das Aufgabenprogramm fortführen. Durch diese Vorgänge entsteht jedoch ein hoher Aufwand für die Ablaufsteuerung. Es wird nämlich die eigentliche Abarbeitungsreihenfolge gemäß den Prioritätsstufen verändert. Damit ist es nicht mehr möglich, die bei Aufgabenprogrammunterbrechungen zu sichernden temporären Daten des unterbrochenen Aufgabenprogramms in einen einzelnen Stapelspeicher einzutragen. Das Problem wird bei den bekannten Betriebssystemen z.B. dadurch behoben, daß für jedes Aufgabenprogramm ein eigener Stapelspeicher vorgesehen wird. Dies verursacht jedoch einen hohen zusätzlichen Speicherbedarf, der für Großseriensteuergeräte, insbesondere für Kraftfahrzeugsteuergeräte nicht akzeptabel ist.

Die Verwendung der vorkonfigurierten Teilaufgabenprogrammablaufsequenzen, die im Speicher in Form der Teilaufgabenprogrammzeigertabellen abgelegt werden, gemäß Anspruch 2 und 4 und die Verwaltung der Ablaufsteuerungsinformation in einer Tabelle gemäß Anspruch 8, 9 und 10 haben den Vorteil, daß das Auswerten der Ablaufsteuerungsinformationen auf die Fälle von Aufgabenprogrammaktivierungen und Aufgabenprogrammbeendigungen beschränkt werden kann, also insbesondere nicht nach jeder Teilaufgabenprogrammabarbeitung erneut vorgenommen werden muß.

Für den Fall, daß das angeforderte Aufgabenprogramm oder ein anderes Aufgabenprogramm mit gleicher Priorität bereits abgearbeitet wird, sind weitere vorteilhafte Maßnahmen in Anspruch 11 angegeben. Durch diese Maßnahmen wird sichergestellt, das für den Fall, daß mehrere gleichpriore Aufgabenprogramme angefordert sind, als erstes von diesen immer dasjenige Aufgabenprogramm zur Abarbeitung gelangt, das die längste Wartezeit aufweist.

Die Bereitstellung eines vom Anwender aufrufbaren Betriebssystem-Unterprogramms gemäß Anspruch 12 und 13 gewährt den Vorteil, daß bei der Aufteilung des komplexen Steuergeräteprogramms in Teilaufgabenprogramme ein nach funktionalen Gesichtspunkten eine Einheit bildendes Teilaufgabenprogramm, dessen Abarbeitungszeit die Grenze nach Anspruch 3 überschreitet, nicht als Konzession an die Echtzeitanforderungen in zwei oder mehr Teilaufgabenprogramme aufgespalten werden muß. Durch Einfügen von zusätzlichen Unterbrechungsstellen durch Aufruf des dazu vorgesehenen Betriebssystem-Unterprogramms an geeigneten Stellen lassen sich die Echtzeitanforderungen erfüllen, wobei die Vorteile des kooperativen Multitasking erhalten bleiben.

Um sehr harte Echtzeitbedingungen einhalten zu können, ist es vorteilhaft, auch Mischformen der Ablaufsteuerung zuzulassen. Das Verfahren nach Anspruch 15 stellt eine solche Mischform dar, mit dem speziellen Vorteil, daß die Reaktionszeiten von höherprioren preemptiven Aufgabenprogrammen nicht durch die Laufzeiten der Teilaufgabenprogramme niedrigerpriorer Aufgabenprogramme beeinträchtigt werden. Nach diesem Verfahren kann eine kleine Anzahl der höchstprioren Aufgabenprogramme nach dem aus dem Stand der Technik bekannten Prinzip der Ablaufsteuerung (preemptives Multitasking), verwaltet werden und harte Echtzeitanforderungen (sehr kurze geforderte Reaktionszeiten) erfüllen, während die niedrigerprioren Aufgabenprogramme nach dem in den Ansprüchen 1 bis 13 beanspruchten Prinzip der Ablaufsteuerung verwaltet werden.

Das Verfahren gemäß Anspruch 15 ist immer dann vorteilhaft anzuwenden, wenn einerseits für bestimmte Aufgabenprogramme sehr hohe hingegen für andere Aufgabenprogramme geringere Echtzeitanforderungen gelten. In diesem Fall können nämlich die Aufgabenprogramme, für die nur geringere Echtzeitanforderungen gelten, zu einer Prioritätsgruppe zusammengefaßt werden, innerhalb derer die Prozessorzuteilung ausschließlich nach dem Prinzip des kooperativen Multitaskings erfolgt. Für die übrigen Aufgabenprogramme mit den harten Echtzeitanforderungen gilt die Beschränkung auf die vorgegebenen Unterbrechungsstellen der niedrigerprioren Aufgabenprogramme nicht, d.h. sie können jedes niedrigerpriore Aufgabenprogramm aus beliebigen Gruppen preemptiv unterbrechen. Somit ist eine differenzierte Behandlung der Aufgabenprogramme einer Anwendung hinsichtlich der Ablaufsteuerung entsprechend ihrer unterschiedlichen Echtzeitanforderungen möglich. Damit kann dann auch der Bedarf an Rechnerressourcen durch die optimal angepaßte Kombination beider erwähnter Ablaufsteuerungsverfahren minimiert werden, wobei die vorgegebenen Echtzeitanforderungen immer eingehalten werden. Eine besonders einfache Einteilung der Aufgabenprogramme nach den erfindungsgemäßen Ablaufsteuerungsverfahren von Anspruch 1 und Anspruch 15 ist in Anspruch 16 angegeben. Diese Einteilung in zwei Prioritätsbereiche kommt einem häufigen Anwendungsfall sehr entgegen, bei dem ein kleiner Teil echtzeitkritischer Aufgabenprogramme (oberer Prioritätsbereich) nach dem preemptiven Ablaufsteuerungsverfahren und ein im allgemeinen größerer Teil der Aufgabenprogrammen mit gemäßigten bis geringen Echtzeitanforderungen (unterer Prioritätsbereich) nach dem kooperativen Ablaufsteuerungsverfahren gemäß Anspruch 1, bei dem nur zwischen abgeschlossenen Teilaufgabenprogrammen unterbrochen werden kann, abgearbeitet werden.

### Zeichnung

Ein Ausführungsbeispiel der Erfindung ist in der Zeichnung dargestellt und in der nachfolgenden Beschreibung näher erläutert.

Es zeigen
Figur 1 ein grobes Blockschaltbild eines Kraftstoffeinspritzungs-Steuergerätes für eine Brennkraftmaschine;
Figur 2 eine schematische Darstellung für einen möglichen Programmablauf in einem Kraftfahrzeugsteuergerät, wobei die Ablaufsteuerung mehrerer Aufgabenprogramme durch ein Betriebssystem, wie es aus dem Stand der Technik bekannt ist, vorgenommen wird;
Figur 3 ein Zustandsdiagramm für Aufgabenprogramme, die von einem Betriebssystem verwaltet werden, wie es aus dem Stand der Technik bekannt ist;
Figur 4 ein Zustandsdiagramm für Aufgabenprogramme, die nach dem erfindungsgemäßen Verfahren verwaltet werden;
Figur 5 eine schematische Darstellung eines möglichen Programmablaufs bei dem Kraftstoffeinspritzungssystem für eine Brennkraftmaschine, wobei die Ablaufsteuerung entsprechend dem kooperativen Multitasking wie im erfindungsgemäßen Verfahren beschrieben, arbeitet;
Figur 6 und 7 eine schematische Darstellung der Ablaufsteuerung mit Hilfe von Zeigern und Tabellen gemäß des erfindungsgemäßen Verfahrens und
Figur 8 den formalen Aufbau des Statuswortes eines Aufgabenprogramms;
Figur 9a eine schematische Darstellung für die Unterteilung der Prioritätsskala für Aufgabenprogramme eines komplexen Steuerprogramms in Prioritätsgruppen zur Konfigurierung einer erfindungsgemäßen Kombination des preemptiven und des kooperativen Ablaufsteuerungsverfahrens;
Figur 9b eine äquivalente Darstellung der gleichen Unterteilung mit Hilfe von Haupt- und Subprioritäten;
Figur 10 ein zweites Beispiel für die Unterteilung der Prioritätsskala für Aufgabenprogramme eines komplexen Steuerprogramms in Prioritätsgruppen;
Figur 11a ein erstes Beispiel für die Unterbrechung eines Aufgabenprogramms durch ein höherpriores Aufgabenprogramm;
Figur 11b ein zweites Beispiel für die Unterbrechung eines Aufgabenprogramms durch ein höherpriores Aufgabenprogramm und
Figur 11c den Fall einer Unterbrechungsanforderung von einem Aufgabenprogramm, das jedoch niedrigere Priorität als das rechnende Aufgabenprogramm aufweist.

### Beschreibung der Erfindung

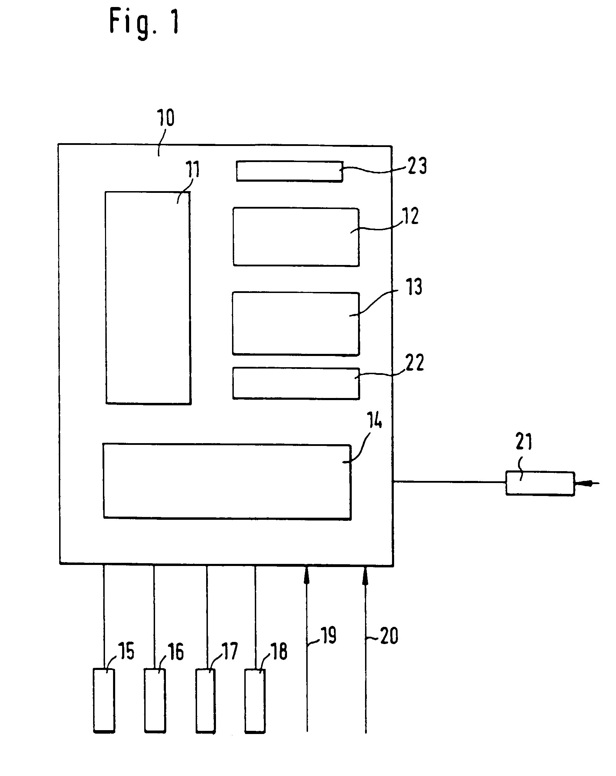

In der Figur 1 bezeichnet die Bezugszahl 10 ein Kraftstoffeinspritzungs-Steuergerät für eine Brennkraftmaschine. Mit der Bezugszahl 11 ist der Mikrorechner des Kraftstoffeinspritzungs-Steuergerätes bezeichnet. Die Bezugszahl 12 verweist auf den Schreib-/Lese-Speicher (RAM) des Steuergerätes 10. Die Bezugszahl 13 bezeichnet den Festwertspeicher (EPROM) und die Bezugszahl 22 einen nichtflüchtigen Schreib/Lese-Speicher (EEPROM) des Steuergerätes 10. Mit der Bezugszahl 14 ist eine Ein-/Ausgabeeinheit des Steuergerätes 10 bezeichnet. Die Bezugszahl 23 bezeichnet einen Zeitzähler des Steuergerätes. Der konkrete Aufbau eines derartigen Steuergerätes ist aus dem Stand der Technik hinlänglich bekannt, so daß hierauf im folgenden nicht näher eingegangen wird. An das Steuergerät 10 ist ein Motortemperaturfühler 15, ein Ansauglufttemperaturfühler 16, ein Drosselklappenpotentiometer 17 und eine Sauerstoff-Sonde 18 angeschlossen. Mit der Bezugszahl 19 ist ein Signaleingang bezeichnet, aus dem Drehzahl und Kurbelwellenwinkel berechnet werden können. Dieses Signal wird von einem Zündungssteuergerät an das Einspritzungssteuergerät geliefert. Der weitere Eingang 20 ist mit dem Zündschloß gekoppelt. Weiterhin steht das Steuergerät 10 mit einem elektromagnetischen Einspritzventil 21 in Verbindung.

Die Funktion des Kraftstoffeinspritz-Steuergerätes ist wie folgt: Das Kraftstoffeinspritz-Steuergerät verarbeitet die anliegenden Eingabesignale und berechnet hieraus die Einspritzzeit als Maß für die einzuspritzende Kraftstoffmenge. In Abhängigkeit von Drehzahl und Kurbelwellenwinkel löst das Steuergerät 10 die Einspritzimpulse mit den im voraus berechneten Einspritzzeiten aus. Die genaue Funktionsweise des Einspritzungssteuergerätes ist dem Buch Autoelektrik/Autoelektronik am Ottomotor, VDI-Verlag, 1987, S. 258 bis 261 entnehmbar. Es wird nachfolgend auch noch genauer auf diese Funktionsweise eingegangen.

Zur Realisierung eines derartigen Kraftstoffeinspritz-Steuergerätes ist ein komplexes Steuerprogramm erforderlich. Üblicherweise ist das komplexe Steuerprogramm in eine Reihe von verschiedenen Aufgabenprogrammen eingeteilt. Dabei hat es sich als vorteilhaft erwiesen, die Einteilung in Aufgabenprogramme nach Ablaufgesichtspunkten vorzunehmen. Es gibt nämlich Programmteile, die innerhalb eines festen Zeitrasters abgearbeitet sein müssen, wobei häufig mehrere unterschiedliche Zeitraster verwendet werden. Weiterhin gibt es Programmteile, die nur innerhalb eines bestimmten Betriebszustandes oder als Reaktion auf ein externes oder internes Ereignis, wie z.B. der Programmstart, das Programmende, der Vollastbetrieb, der Leerlaufbetrieb, der Warmlaufbetrieb,etc. abgearbeitet werden sollen. Weiterhin sind bestimmte Programmteile innerhalb eines festen Winkelrasters in Abhängigkeit des Kurbelwellenwinkels abzuarbeiten. Üblicherweise werden sämtliche Programmteile, die innerhalb des gleichen Zeit-/Winkelrasters abzuarbeiten sind, zu einem Aufgabenprogramm zusammengefaßt. Für jedes Aufgabenprogramm ist dann zusätzlich ein Aktivierungsereignis charakteristisch, das den Aufruf des Aufgabenprogramms veranlaßt. Z.B. kann den Aufruf eines Aufgabenprogramms innerhalb eines festen Zeitrasters der Zeitzähler 23 bewirken, der in der Interrupt-Service-Routine eines periodisch von der Hardware z.B. jede Millisekunde generierten Interrupts inkrementiert wird. In dieser Interrupt-Service-Routine wird überprüft, ob bei dem aktuellen Zählerstand des Zeitzählers ein neues Aufgabenprogramm zu aktivieren ist oder nicht. Zur Koordinierung der Aufgabenprogrammaufrufe hat es sich als vorteilhaft erwiesen, den einzelnen Aufgabenprogrammen eine bestimmte Priorität zuzuordnen, die die Dringlichkeit der Abarbeitung des Aufgabenprogramms angibt. Für die Verwaltung der Abarbeitung der einzelnen Aufgabenprogramme wird häufig ein Betriebssystem eingesetzt. Dieses entscheidet dann anhand eines entsprechenden Programms welches Aufgabenprogramm zu einem gegebenen Zeitpunkt von dem Mikrorechner abgearbeitet werden soll.

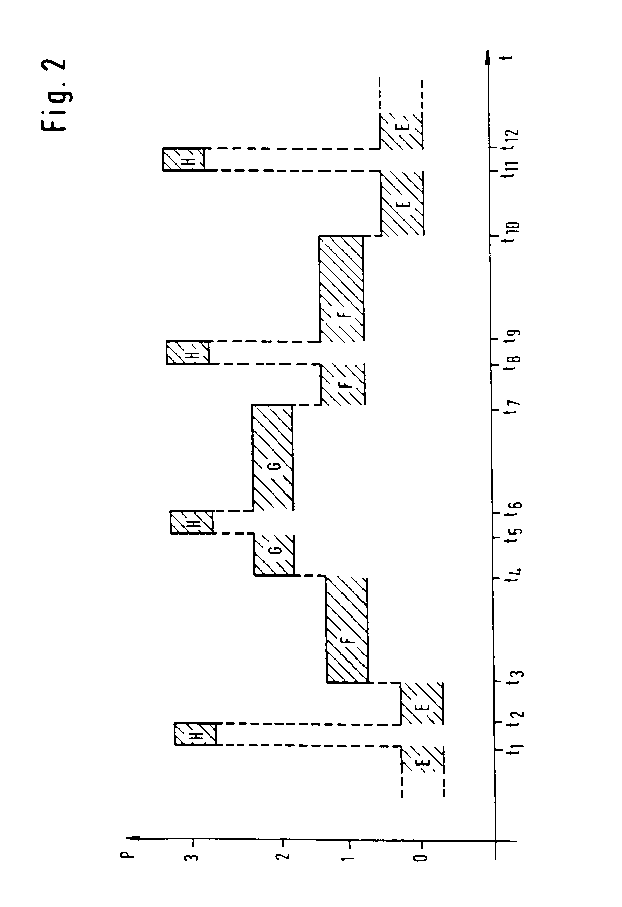

Ein Ausschnitt aus einem möglichen Programmablauf ist in Figur 2 dargestellt. Dort sind als Beispiel vier verschiedene Aufgabenprogramme E, F, G, H aufgeführt. Das Aufgabenprogramm E besitzt die niedrigste Priorität 0 und soll unabhängig von einem festen Zeitraster immer dann abgearbeitet werden, wenn kein dringenderes Aufgabenprogramm zur Abarbeitung bereitsteht. Das Aufgabenprogramm F soll alle 100 ms abgearbeitet werden. Ihm ist die Priorität 1 zugeordnet. Das Aufgabenprogramm G soll innerhalb eines festen Winkelrasters von 180 Grad Kurbelwellenwinkel abgearbeitet werden. Ihm kommt die Priorität 2 zu. Das Aufgabenprogramm H soll schließlich in einem festen Zeitraster von alle 10 ms abgearbeitet werden. Ihm kommt die höchste Priorität 3 zu. Bei dem in Figur 2 dargestellten Programmablauf wird ein Betriebssystem zur Ablaufsteuerung verwendet, bei dem die einzelnen Aufgabenprogramme aufgrund der Anforderung der Abarbeitung eines höherprioren Aufgabenprogramms zu jedem beliebigen Zeitpunkt unterbrochen werden können. Eine derartige Ablaufsteuerung entspricht dem des preemptiven Multitasking. Zum Zeitpunkt t₁ wird z.B. das Aufgabenprogramm E unterbrochen und die Abarbeitung des Aufgabenprogramm H gestartet. Zum Zeitpunkt t₂ ist die Abarbeitung des Aufgabenprogrammms H beendet. Es wird anschließend die Abarbeitung des Aufgabenprogramm E an der Unterbrechungsstelle fortgesetzt. Die weiteren Unterbrechungsstellen der einzelnen Aufgabenprogramme können der Figur 2 entnommen werden. Sämtliche Aufgabenprogramme sind noch durch Interrupt-Serviceroutinen von aufgetretenen Interrupt-Anforderungen unterbrechbar. Dies ist jedoch in der Figur 2 zwecks besserer Übersichtlichkeit nicht dargestellt.

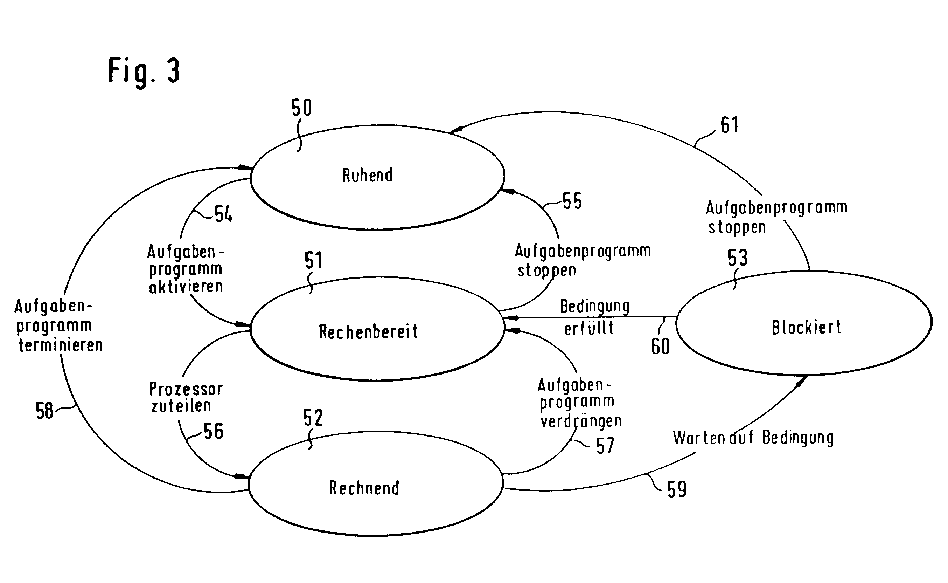

Die einzelnen Aufgabenprogramme können verschiedene Zustände annehmen. In Figur 3 sind die möglichen Zustände dargestellt, die häufig für Betriebssysteme, die preemptives Multitasking verwenden, gelten. Es sind vier mögliche Zustände dargestellt. Im Zustand 51 "ruhend" befindet sich ein Aufgabenprogramm, das den Prozessor nicht belegt und auch aktuell Nichts zu rechnen hat. Ein Aufgabenprogramm im Zustand 51 "rechenbereit" hat etwas zu berechnen, ist jedoch nicht im Besitz des Prozessors, da dieser durch ein anderes gleich- oder höherpriores Aufgabenprogramm belegt ist. Aus dem Zustand 50 "ruhend" gelangt ein Aufgabenprogramm durch "Aufgabenprogramm aktivieren" 54 in den Zustand 51 "rechenbereit". Ein rechenbereites Aufgabenprogramm kann durch "Aufgabenprogramm stoppen" 55 wieder in den ruhenden Zustand 50 zurückversetzt werden. Aus dem rechenbereiten Zustand 51 gelangt ein Aufgabenprogramm durch "Prozessor zuteilen" 56 in den Zustand 52 "rechnend", in dem das Aufgabenprogramm den Prozessor belegt. Ein rechnendes Aufgabenprogramm kann durch ein höherpriores Aufgabenprogramm in den Zustand 51 "rechenbereit" verdrängt werden 57, oder es kann durch "Aufgabenprogramm terminieren" 58 beendet werden und gelangt damit wieder in den ruhenden Zustand 50.

Gemäß Figur 3 ist in dem Zustandsdiagramm für die Aufgabenprogramme noch ein Zustand 53 "blockiert" vorgesehen. In diesen Zustand gerät ein Aufgabenprogramm dann, wenn es zu seiner Fortführung erst das Eintreffen einer bestimmten Bedingung abwarten muß. Dieser Fall tritt z.B. dann auf, wenn das Aufgabenprogramm zu seiner Fortführung auf bestimmte Rechenergebnisse zugreift, die jedoch von einem anderen Aufgabenprogramm bereitgestellt werden. Wenn die Daten zum Zugriffszeitpunkt noch nicht vorliegen, so gerät das Aufgabenprogramm in den Zustand 53 "blockiert". Es muß dann erst das Aufgabenprogramm abgearbeitet sein, das die Daten berechnet, bevor das blockierte Aufgabenprogramm fortgeführt werden kann. Liegen die Rechenergebnisse vor, so verläßt das Aufgabenprogramm den Zustand 53 "blockiert" und geht in den Zustand 51 "rechenbereit" über. Der Übergang von dem Zustand 53 "blockiert" in den Zustand 51 "rechenbereit" ist daher durch die Beschriftung "Bedingung erfüllt" 60 gekennzeichnet. Der Übergang von dem Zustand 52 "rechnend" in den Zustand 53 "blockiert" ist als "Warten auf Bedingung" 59 bezeichnet.

Ein anderes Beispiel für eine Bedingung, die ein Aufgabenprogramm bei Nichterfüllung in einen blockierten Zustand versetzen kann, ist bei der Speicherzuteilung gegeben. Wenn z.B. ein Aufgabenprogramm für die Ausführung einer komplexen Berechnung einen zusätzlichen Speicherbereich benötigt, der jedoch gerade nicht zur Verfügung steht, so ist ebenfalls eine Bedingung nicht erfüllt, die das Aufgabenprogramm in seiner weiteren Fortführung blockiert. Erst wenn von einem anderen Aufgabenprogramm wieder Speicher freigegeben wird, kann dieser dem blockierten Aufgabenprogramm zugeteilt werden, das daraufhin in seiner Abarbeitung fortgesetzt wird.

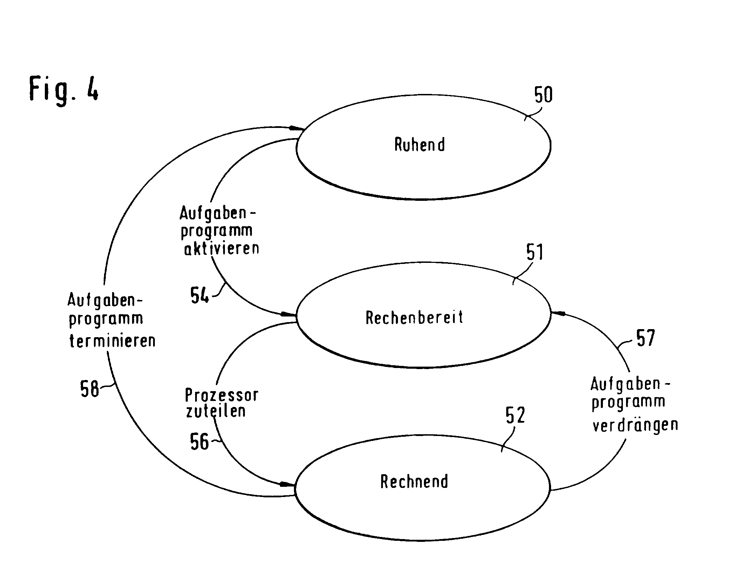

In Figur 4 sind die möglichen Zustände von Aufgabenprogrammen dargestellt, die bei der Steuerung von Vorgängen nach dem erfindungsgemäßen Verfahren auftreten können. Es sind ebenfalls die drei Zustände 50, 51, 52 "ruhend", "rechenbereit" und "rechnend" für die Aufgabenprogramme erlaubt. Nicht erlaubt ist jedoch der Zustand "blockiert". Dieser Zustand soll bewußt vermieden werden, weil er einen hohen Verwaltungsaufwand erfordert und einen hohen Schreib-/Lese-Speicherbedarf verursacht. Dieser Aufwand ist jedoch bei Großseriensteuergeräten, wie sie z.B. bei der Steuerung von Vorgängen in Kraftfahrzeugen eingesetzt werden, nicht akzeptabel. Außerdem sind alle möglichen Blockierungszustände in einem komplexen SG-Programm, dessen BS mit Aufgabenprogrammblockierungen arbeitet, nur schwer zu ermitteln und nur schwer in ihren Konsequenzen zu übersehen. Wechselseitige Abhängigkeiten können so z.B. leicht zu "Verklemmungen" führen, d.h. zu Ablauffehlern. Die eingezeichneten Übergangspfeile in Figur 4 entsprechen denjenigen in Figur 3 und werden deshalb nicht nochmal erläutert.

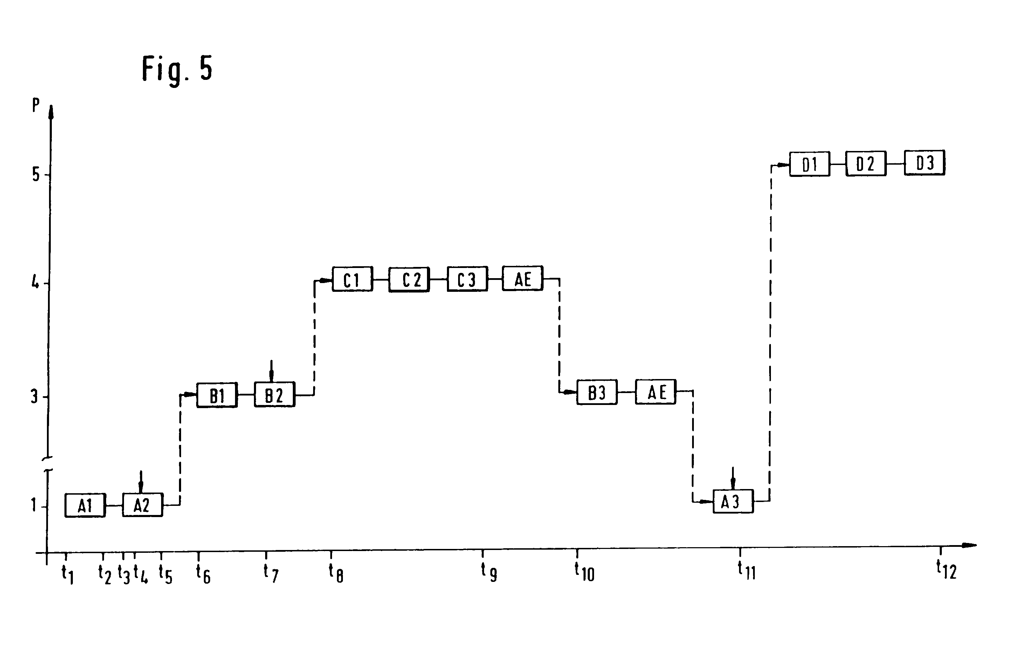

In Figur 5 ist jetzt ein möglicher Programmablauf für die Kraftstoffeinspritzungssteuerung bei der Brennkraftmaschine dargestellt. Aus der Darstellung wird die beispielhafte Aufteilung des komplexen Steuerprogramms in vier verschiedene Aufgabenprogramme deutlich. Das Aufgabenprogramm A enthält alle Anweisungen des komplexen Steuerprogramms, die zeitgesteuert mit einer Periode von 200 ms abgearbeitet werden sollen. Dem Aufgabenprogramm A ist die Priorität 1 zugeordnet. Das Aufgabenprogramm A ist erfindungsgemäß in drei Teilaufgabenprogramme A1, A2, A3 eingeteilt. Im Teilaufgabenprogramm A1 wird die Motortemperatur erfaßt. Dabei wird das Signal des Motortemperaturfühlers 15 ausgewertet und in eine Motortemperatur umgerechnet. In dem Teilaufgabenprogramm A2 wird ein Gemischanreicherungsfaktor in Abhängigkeit von der Motortemperatur errechnet. Dieser Gemischanreicherungsfaktor wird nach einem Kaltstart der Brennkraftmaschine für die Warmlaufphase der Brennkraftmaschine benötigt. Im Teilaufgabenprogramm A3 wird die Ansauglufttemperatur erfaßt. Hierzu wird das Signal des Ansauglufttemperaturfühlers 16 ausgewertet. Da sich die Motortemperatur sowie auch die Ansauglufttemperatur nur langsam verändern, reicht es aus, diese Größen nur alle 200 ms neu zu erfassen. Aus diesem Grund sind die Teilaufgabenprogramme A1, A2 und A3 dem Aufgabenprogramm A zugeordnet, das nur in Zeitabständen von 200 ms abgearbeitet werden soll.

Das Aufgabenprogramm B soll demgegenüber wesentlich häufiger abgearbeitet werden. Es soll zeitgesteuert alle 10 ms aufgerufen werden. Ihm ist die Priorität 3 zugeordnet. Es ist in die drei Teilaufgabenprogramme B1, B2 und B3 eingeteilt. In dem Teilaufgabenprogramm B1 wird die Lambda-Regelung durchgeführt. Dabei wird die vom Steuergerät in anderen Teilaufgabenprogrammen vorausberechnete Einspritzzeit ggf. so korrigiert, daß das Luft-Kraftstoff-Verhältnis nur minimal vom idealen Wert (λ = 1) abweicht. In dem Teilaufgabenprogramm B2 werden adaptive Gemischkorrekturen berechnet. Ein Adaptionsalgorithmus, basierend auf der Signalauswertung der Sauerstoff-Sonde 18 errechnet Korrekturwerte für die aus einem Grundkennfeld ermittelten Werte für den Kraftstoffbedarf bei einem bestimmten Betriebspunkt der Brennkraftmaschine und trägt diese Werte in ein Korrekturkennfeld ein. Damit können Alterungserscheinungen sowie Fertigungstoleranzen der Brennkraftmaschine und der Einspritzaggregate individuell kompensiert werden.

Im Teilaufgabenprogramm B3 wird die Motordrehzahl berechnet. Dabei wird das Drehzahlsignal, das am Eingang 19 ansteht, ausgewertet.

Das Aufgabenprogramm C wird kurbelwellenwinkelgerecht alle 180 Grad Kurbelwellenwinkel in Bezug auf einen Bezugspunkt der Kurbelwelle abgearbeitet. Dies gilt für eine Vierzylinder-Brennkraftmaschine. Dem Aufgabenprogramm C ist die Priorität 4 zugeordnet. In dem Teilaufgabenprogramm C1 wird die Motorlast berechnet. Diese ergibt sich aus der aktuellen Motordrehzahl und der Stellung der Drosselklappe, die mit Hilfe des Drosselklappenpotentiometers 17 erfaßt wird, sowie der aktuellen Ansauglufttemperatur.

In dem Teilaufgabenprogramm C2 wird der Kraftstoffbedarf für den aktuellen Betriebspunkt der Brennkraftmaschine errechnet. Der Kraftstoffgrundbedarf wird aus einem Grundkennfeld, das durch die Motorparameter Motordrehzahl und Motorlast aufgespannt wird, entnommen.

In dem Teilaufgabenprogramm C3 werden die ermittelten Anreicherungs- bzw. Abmagerungsfaktoren aufgrund besonderer Betriebsphasen sowie die bei der Lambda-Regelung errechneten Korrekturgrößen in den Grundkraftstoffbedarf eingerechnet. Anschließend erfolgt noch eine Umwandlung des Kraftstoffbedarfs in eine Einspritzzeit für das elektromagnetische Einspritzventil. Das Auslösen der Einspritzimpulse geschieht dann letztlich mit Unterstützung einer besonderen Schaltung, die einen Zähler enthält,der entsprechend der ausgerechneten Einspritzzeit eingestellt ist. Hierfür ist kein gesondertes Teilaufgabenprogramm mehr erforderlich.

Das Aufgabenprogramm D wird ereignisgesteuert lediglich beim Abschalten der Zündung aktiviert. Ihm ist die höchste Priorität 5 zugeordnet. Es ist in die Teilaufgabenprogramme D1, D2 und D3 eingeteilt. In dem Teilaufgabenprogramm D1 wird das Einspritzventil und die Kraftstoffpumpe abgeschaltet. In dem Teilaufgabenprogramm D2 werden die in das Korrekturkennfeld eingetragenen Korrekturwerte in den nicht flüchtigen Speicher 22 programmiert.

In dem Teilaufgabenprogramm D3 findet die Abschaltung des Steuergerätes 10 statt.

Alle dargestellten Aufgabenprogramme und Teilaufgabenprogramme sind durch Interrupt-Programme unterbrechbar, sofern keine besonderen Sperrungen für Interrupt-Anforderungen programmiert wurden. Die Zeitsteuerung der Aufgabenprogramme A und B geschieht dann auch mit Hilfe von Interrupt-Anforderungen. Hierzu wird der Zeitzähler 23 in dem Steuergerät 10 benutzt, der in der Interrupt-Service-Routine eines periodisch von der Hardware z.B. jede Millisekunde generierten Interrupts inkrementiert wird. In dieser Interrupt-Serviceroutine wird eine Liste mit den Aktivierungszeitpunkten für die Aufgabenprogramme A und B durchsucht. Stimmt ein Eintrag in dieser Liste mit dem aktuellen Zählerstand des Zeitzählers 23 überein, so wird das entsprechende Aufgabenprogramm aktiviert. Hierauf wird jedoch im folgenden noch genauer eingegangen. Die Liste mit den Einträgen der Aktivierungszeitpunkte für die Programme A und B ist als verkettete Liste ausgeführt. Dadurch braucht im Regelfall nur das erste Element der verketteten Liste mit dem aktuellen Zählerstand verglichen zu werden. Nur für den Fall, daß das erste Listenelement mit dem aktuellen Zählerstand übereinstimmt, müssen auch die nachfolgenden Listenelemente mit dem Listenzählerstand verglichen werden, so lange, bis keine Übereinstimmung mehr vorhanden ist.

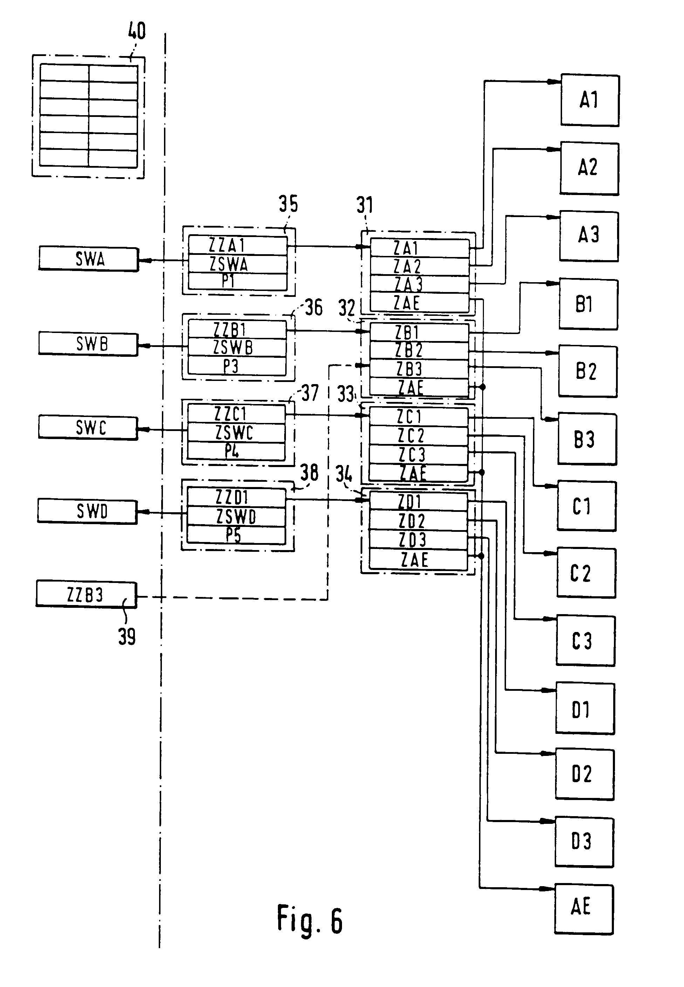

Für die Realisierung des erfindungsgemäßen Verfahrens sind bestimmte Maßnahmen erforderlich, die jetzt anhand der Figuren 5 bis 7 erläutert werden sollen. Die Einteilung der einzelnen Aufgabenprogramme A, B, C, D in eine Anzahl von Teilaufgabenprogrammen wird von dem Software-Entwickler vorgenommen. Der zugehörige Programmcode wird nach Fertigstellung des Programms in den Festwertspeicher 13 des Steuergerätes eingetragen. Im Festwertspeicher des Steuergerätes 10 sind daher die einzelnen Teilaufgabenprogramme A1 bis D3 einzeln abgelegt. Dies ist in Figur 6 angedeutet. Die Darstellung ist insofern vereinfacht, als daß die Teilaufgabenprogramme A1 bis D3 alle gleich groß dargestellt sind; sie können aber auch unterschiedliche Größen aufweisen. Für jedes Aufgabenprogramm ist eine Teilaufgabenprogrammzeigertabelle 31 bis 34 vorgesehen. Auch diese Tabellen sind in dem Festwertspeicher 13 fest eingespeichert. In jeder Teilaufgabenprogrammzeigertabelle ist für jedes Teilaufgabenprogramm des jeweiligen Aufgabenprogramms ein Zeiger eingetragen, der auf den Beginn des Programmcodes des jeweiligen Teilaufgabenprogramms zeigt. Als Beispiel wird die Tabelle 33 für das Aufgabenprogramm C genannt. In dieser Tabelle ist ein Teilaufgabenprogrammzeiger ZC1 vorgesehen, der auf den Beginn des Programmcodes für das Teilaufgabenprogramm C1 zeigt. Weiterhin ist ein Teilaufgabenprogrammzeiger ZC2 vorgesehen, der auf den Beginn des Teilaufgabenprogramms C2 zeigt. Schließlich ist noch ein Teilaufgabenprogrammzeiger ZC3 vorgesehen, der auf den Beginn des Teilaufgabenprogramms C3 zeigt.

Am Ende jeder Teilaufgabenprogrammzeigertabelle 31 bis 34 ist noch ein Zeiger ZAE auf ein Teilaufgabenprogramm AE vorgesehen, das für die Ablaufsteuerung wichtig ist. Seine Funktion wird später noch genauer erläutert.

Weiterhin sind in dem Festwertspeicher 13 beschreibende Datenstrukturen 35 bis 38 (Aufgabenprogramm-Deskriptoren) vorgesehen. Darin ist für jedes Aufgabenprogramm eine Information über die Priorität P1 bis P5 des jeweiligen Aufgabenprogramms, ein Zeiger ZZA1 bis ZZD1 auf den ersten Teilaufgabenprogrammzeiger ZA1 bis ZD1 der zugehörigen Teilaufgabenprogrammzeigertabelle 31 bis 34 und ein Zeiger ZSWA bis ZSWD auf ein Statuswort des zugehörigen Aufgabenprogramms vorgesehen. Die einzelnen Statusworte SWA bis SWD der Aufgabenprogramme sind im Schreib-/Lesespeicher 12 des Steuergerätes 10 abgespeichert. Die Statusworte der Aufgabenprogramme sind deshalb im Schreib-/Lesespeicher 12 des Steuergerätes 10 abgespeichert, weil sie während des Programmablaufs veränderliche Programmeinträge erfahren. Als Beispiel für die Einträge in einem Aufgabenprogramm-Deskriptor 35 bis 38 wird wieder das Aufgabenprogramm C betrachtet. Der Zeiger ZZC1 zeigt auf den ersten Eintrag in der Tabelle 33, d.h. auf den Teilaufgabenprogrammzeiger ZC1. Der Zeiger ZSWC zeigt auf das Statuswort des Aufgabenprogramms SWC. Weiterhin ist in dem Aufgabenprogramm-Deskriptor 37 für das Aufgabenprogramm C eingetragen, daß dem Aufgabenprogramm C die Prioritätsstufe 4 zukommt. Die Einträge in die Aufgabenprogramm-Deskriptoren 35, 36 und 38 können der Figur 6 ohne Erklärung entnommen werden.

Weiterhin ist in dem Schreib/Lesespeicher 12 eine Ablaufsteuerungstabelle 40 vorgesehen. In sie wird nach Prioritätsstufen geordnet für jedes aktivierte, d.h. im Zustand "rechenbereit" oder "rechnend" befindliche Aufgabenprogramm ein Zeiger ZDA bis ZDD eingetragen, der auf den Anfang des zugehörigen Aufgabenprogramm-Deskriptors zeigt und weiterhin ein Zeiger, der auf den Zeiger ZA1 bis ZD3 desjenigen Teilaufgabenprogramms A1 bis D3 zeigt, mit dem ein rechenbereites Aufgabenprogramm nach einer Unterbrechung zwischen Teilaufgabenprogrammen fortgesetzt werden soll. Wenn also ein Aufgabenprogramm unterbrochen wurde, ist in die Ablaufsteuerungstabelle 40 ein Zeiger eingetragen, der auf denjenigen Teilaufgabenprogrammzeiger zeigt, der das nächste Teilaufgabenprogramm nach der Unterbrechung bezeichnet. Wurde ein Aufgabenprogramm aus dem Zustand "ruhend" in den Zustand "rechenbereit" überführt, so enthält die Ablaufssteuerungstabelle 40 für dieses Aufgabenprogramm einen Zeiger, der auf den ersten Teilaufgabenprogrammzeiger ZA1 bis ZD1 der entsprechenden Teilaufgabenprogrammzeigertabelle 31 bis 34 zeigt. Die Ablaufsteuerungstabelle wird in der Programminitialisierung mit Nullzeigern initialisiert.

Schließlich ist im Schreib-/Lesespeicher 12 des Steuergerätes 10 noch ein Tabellenzeiger 39 vorgesehen. Dieser Tabellenzeiger 39 wird immer so gesetzt, daß er auf den Teilaufgabenprogrammzeiger des nächsten abzuarbeitenden Teilaufgabenprogramms zeigt. In dem dargestellten Beispiel zeigt der Tabellenzeiger 39 auf den Teilaufgabenprogrammzeiger ZB3. Das Teilaufgabenprogramm B3 wird also als nächstes abgearbeitet werden. Der Tabellenzeiger 39 wird nach jeder Abarbeitung eines Teilaufgabenprogramms inkrementiert. In einem "Dispatcher" genannten Programmteil, der nach jeder abgeschlossenen Abarbeitung eines Teilaufgabenprogramms durchlaufen wird, wird als nächstes abzuarbeitendes Teilaufgabenprogramm dasjenige ausgewählt, auf das der Tabellenzeiger vor der Inkrementierung zeigte. Diese Vorgehensweise wird nachfolgend anhand des Programmablaufs in Figur 5 nochmals näher erläutert.

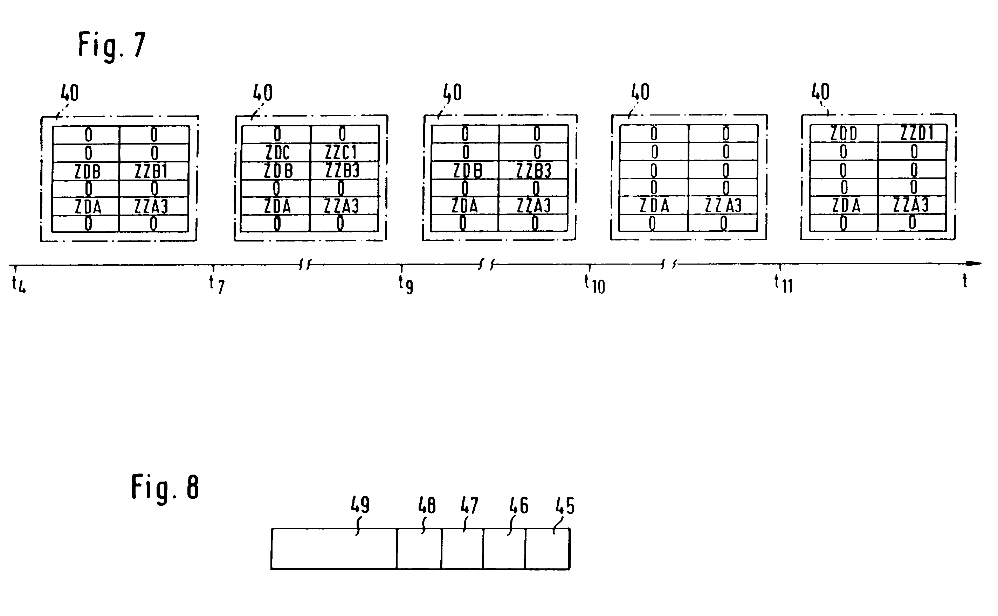

Zum Zeitpunkt t₁ beginnt der Mikrorechner 11 die Abarbeitung des Teilaufgabenprogramms A₁. Zu diesem Zeitpunkt ist in dem Tabellenzeiger 39 ein Eintrag ZZA2 vorhanden. Das nächste abzuarbeitende Teilaufgabenprogramm ist damit das Teilaufgabenprogramm A2. Zum Zeitpunkt t₂ wird das Teilaufgabenprogramm A1 beendet. Im daran anschließenden Dispatcherdurchlauf wird der Tabellenzeiger 39 inkrementiert, so daß er den Eintrag ZZA3 erhält und zum Zeitpunkt t₃ wird das Teilaufgabenprogramm aufgerufen, das der Tabellenzeiger 39 vor seiner Inkrementierung durch Zeigerverkettung (ZZA2→ZA2→A2) auswählte. Dies ist das Teilaufgabenprogramm A2. Zum Zeitpunkt t₄ stellt die Interrupt-Serviceroutine des Zeitzählers 23 fest, daß zu diesem Zeitpunkt das Aufgabenprogramm B aktiviert werden soll. Zu diesem Zweck ruft sie den für Aufgabenprogrammaktivierungen zuständigen Betriebssystem-Dienst auf, der den Zeiger ZDB auf den Aufgabenprogrammdeskriptor 36 und den Zeiger ZZB1 auf den Teilaufgabenprogrammzeiger ZB1 in die Ablaufsteuertabelle 40 auf Prioritätsstufe 3 einträgt. Da das Aufgabenprogramm B nun das höchstpriore bereite Aufgabenprogramm im System ist, wird ein Wechsel zu diesem Aufgabenprogramm zum Ende des laufenden Teilaufgabenprogramms A2 vorbereitet, indem der Tabellenzeiger 39 mit dem Wert ZZB1 geladen wird. Da das Aufgabenprogramm A während seiner Abarbeitung unterbrochen wird, wird auf der Prioritätsstufe 1 der Zeiger ZZA3 eingetragen, damit das Aufgabenprogramm A später mit dem Teilaufgabenprogramm A3 fortgesetzt werden kann. Einträge für die übrigen Prioritätsstufen bleiben unverändert, d.h. dort sind Nullzeiger eingetragen. Die Einträge in die Ablaufssteuerungstabelle 40 sind in der Figur 7 dargestellt.

Erfindungsgemäß wird das Teilaufgabenprogramm A2 danach erst noch vollständig abgearbeitet. Zum Zeitpunkt t₅ ist die Abarbeitung des Teilaufgabenprogramms A2 beendet. Es wird dann nachfolgend wieder der Dispatcher durchlaufen, der den Tabellenzeiger 39 inkrementiert. Nach der Inkrementierung zeigt der Tabellenzeiger 39 also auf den Wert ZZB2. Das Aufgabenprogramm A wechselt damit vom Status "rechnend" in den Status "rechenbereit" über. Sodann wird mit der Abarbeitung des Teilaufgabenprogramms B1 zum Zeitpunkt t₆ begonnen.

Zum Zeitpunkt t₇ ergeht eine Interruptanforderung an den Mikrorechner 11 aufgrund des anliegenden Drehzahlsignals. Dieses Interruptsignal gibt an, daß das Winkelintervall von 180° Kurbelwellenwinkel beendet ist. In der zugehörigen Interrupt-Serviceroutine wird der Betriebssystem-Dienst aufgerufen, der das Aufgabenprogramm C aktiviert und die Ablaufssteuerungstabelle 40 entsprechend aktualisiert. Es wird für die Prioritätsstufe 4 der Zeiger ZDC auf den Beginn des Aufgabenprogramm-Deskriptors 37 und der Zeiger ZZC1 auf den Teilaufgabenprogrammzeiger ZC1 des Aufgabenprogramms C eingetragen. Das Aufgabenprogramm C ist damit aktiviert. Da das Aufgabenprogramm B nach der Abarbeitung des Teilaufgabenprogramms B2 unterbrochen wird, wird bei Prioritätsstufe 3 der Zeiger ZZB3 eingetragen. Die beschriebenen Einträge können Figur 7 entnommen werden. Schließlich wird der Tabellenzeiger 39 auf den Wert ZZC1 entsprechend des höchsten Eintrages in der Ablaufssteuerungstabelle 40 gesetzt. Nach der Beendigung der Abarbeitung des Teilaufgabenprogramms B2 wird dementsprechend das Teilaufgabenprogramm C1 als nächstes abgearbeitet. Der Wechsel zwischen diesen Teilaufgabenprogrammen findet in gleicher Weise statt, wie bei dem Wechsel zwischen den Teilaufgabenprogrammen A2 und B2 beschrieben. Zum Zeitpunkt t₈ findet die Abarbeitung des Teilaufgabenprogramms C1 statt. Das Aufgabenprogramm C wird vollständig zu Ende geführt, ohne daß in der Zwischenzeit die Abarbeitung eines anderen Aufgabenprogramms angefordert wird.

Nach der Beendigung des Aufgabenprogramms C zum Zeitpunkt t₉ wird wieder der Dispatcher durchlaufen, der den Tabellenzeiger 39 inkrementiert und das nachfolgend abzuarbeitende Teilaufgabenprogramm aufruft, das durch den Wert des Tabellenzeigers 39 vor seiner Inkrementierung selektiert wird. Es ist das Teilaufgabenprogramm AE, das jeweils zur Beendigung eines Aufgabenprogramms aufgerufen wird. Darin wird die Ablaufsteuerungstabelle 40 aktualisiert. Da das Aufgabenprogramm C beendet ist, werden in die Ablaufssteuerungstabelle 40 unter der Prioritätsstufe 4 Nullzeiger eingetragen. Anschließend wird aus der Ablaufsteuerungstabelle 40 der Zeiger ZZB3 entnommen und in den Tabellenzeiger 39 eingetragen. Das Aufgabenprogramm B weist nämlich zu diesem Zeitpunkt die höchste Priorität von allen im Zustand "rechenbereit" befindlichen Aufgabenprogrammen auf. Zum Zeitpunkt t₁₀ wird anschließend das Teilaufgabenprogramm B3 abgearbeitet. Nach dessen Abarbeitung wird wieder das Teilaufgabenprogramm AE aufgerufen. Darin werden unter der Prioritätsstufe 3 Nullzeiger in die Ablaufsteuerungstabelle 40 eingetragen. In den Tabellenzeiger 39 wird der Zeiger ZZA3 auf den Teilaufgabenprogrammzeiger ZA3 eingetragen.

Zum Zeitpunkt t₁₁ wird dem Mikrorechner 11 des Steuergerätes durch Drehen des Zündschlüssels in die Stellung "aus" über den Eingang 20 signalisiert, daß die Zündung abgeschaltet und das Steuerprogramm beendet werden soll. In der zugehörigen Interrupt-Serviceroutine wird dann wieder der für Aufgabenprogrammaktivierungen zuständige Betriebssystem-Dienst aufgerufen, der in die Ablaufsteuerungstabelle 40 für die Prioritätsstufe 5 den Zeiger ZDD auf den Beginn des Aufgabenprogramm-Deskriptors 38 und den Zeiger ZZD1 auf den ersten Teilaufgabenprogrammzeiger ZD1 einträgt. Dies geschieht analog wie oben für die Aktivierungen der Aufgabenprogramme B und C beschrieben..

Durch Laden des Tabellenzeigers 39 mit der Adresse ZZD1 des Teilaufgabenprogrammzeigers ZD1 wird der Wechsel zum nun höchstprioren, bereiten Aufgabenprogramm D vorbereitet. Der Wechsel findet nach Beendigung des noch in Abarbeitung befindlichen Teilaufgabenprogramms A3 statt.

Anschließend werden die Aufgabenprogramme D1, D2 und D3 nacheinander abgearbeitet, wie schon zuvor beschrieben. Ein Aufgabenprogrammwechsel findet nicht mehr statt. Auch wird die Ablaufsteuerungstabelle 40 nicht mehr aktualisiert. Zum Zeitpunkt t₁₂ ist der Programmablauf vollständig beendet; das Kraftstoffeinspritzungssteuergerät ist abgeschaltet.

In Figur 8 ist noch der allgemeine Aufbau eines Statuswortes für ein Aufgabenprogramm dargestellt. Wenn in der Speicherstelle 45 eine 1 eingetragen ist, so bedeutet dies, daß sich das zugehörige Aufgabenprogramm in dem Zustand "ruhend" befindet. Wenn in der Speicherstelle 46 eine "1" eingetragen ist, so bedeutet dies, daß das zugehörige Aufgabenprogramm sich im Zustand "rechenbereit" befindet. Wenn in der Speicherstelle 47 eine "1" eingetragen ist, so bedeutet dies, daß das zugehörige Aufgabenprogramm sich in dem Zustand "rechnend" befindet. Wenn in der Speicherstelle 48 eine "1" eingetragen ist, so bedeutet dies, daß das zugehörige Aufgabenprogramm unterbrochen wurde. Die Speicherstellen 49 sind für einen Wartelistenindexeintrag vorgesehen. Wenn nämlich die Abarbeitung eines Aufgabenprogramms neu angefordert wird, so kann es vorkommen, daß in dem für die Aktivierung zuständigen Betriebssystem-Dienst festgestellt wird, daß bereits ein Aufgabenprogramm aktiviert ist - der entsprechende Eintrag in der Ablaufsteuerungstabelle ist ungleich Null - ,das die gleiche Priorität aufweist. In diesem Fall wird das neu aktivierte Aufgabenprogramm in eine Warteschlange eingereiht und in seinem Statuswort eine Information eingetragen, die angibt, welche Position dieses Aufgabenprogramm innerhalb der Warteschlange, die für diese Prioritätsstufe gilt, einnimmt. Es wird dann bei einer späteren Suche nach dem Aufgabenprogramm mit der höchsten Priorität für den Fall daß mehrere Programme mit gleicher Priorität aktiviert sind, auch die Position des jeweiligen Aufgabenprogrammes innerhalb der Warteschlange berücksichtigt. Es wird in diesen Fällen immer das Aufgabenprogramm als nächstes aufgerufen, das die längste Wartezeit aufweist. Entsprechend muß dann auch die Ablaufsteuerungstabelle 40 vergrößert sein, so daß für jede Prioritätsstufe Zeiger auf Beginn und Ende einer nach Wartezeit geordneten Warteschlange für Aufgabenprogramme eingetragen werden können. Nullzeiger zeigen an, daß es gerade keine wartenden Aufgabenprogramme auf dieser Prioritätsstufe gibt.

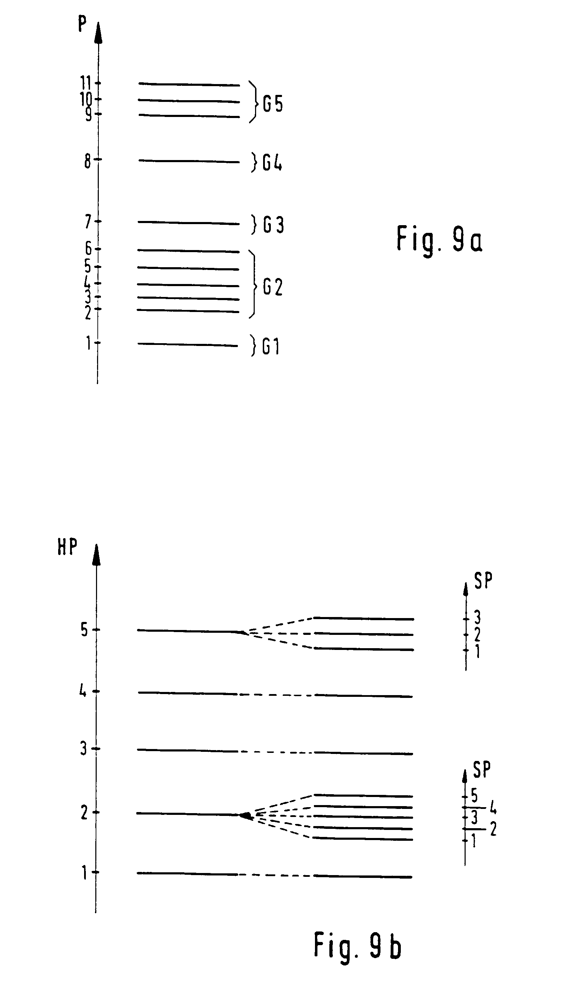

Im folgenden wird noch auf ein Ausführungsbeispiel eingegangen, bei dem nicht alle Aufgabenprogramme nach dem erfindungsgemäßen Ablaufsteuerungsprinzip nach Anspruch 1 (Unterbrechung nur zwischen abgeschlossenen Teilaufgabenprogrammen) abgearbeitet werden. Bei diesem Ausführungsbeispiel für das kombinierte Ablaufsteuerungsverfahren nach Anspruch 15 ist es erlaubt, daß einige Aufgabenprogramme andere Aufgabenprogramme mit niedrigerer Priorität an jeder beliebigen Stelle unterbrechen dürfen, d.h. nach dem als preemptives Scheduling bezeichneten Ablaufsteuerungsprinzip verwaltet werden. Bei dem erfindungsgemäßen kombinierten Ablaufsteuerungsverfahren gibt es also Aufgabenprogramme, die andere niedrigerpriore Aufgabenprogramme an jeder beliebigen Stelle unterbrechen dürfen und weiterhin Aufgabenprogramme, die andere niedrigerpriore Aufgabenprogramme nur zwischen abgeschlossenen Teilaufgabenprogrammen unterbrechen dürfen. In Figur 9a ist der Sachverhalt dargestellt. Dort sind auf einer Prioritätsskala die Aufgabenprogramme mit ihrer jeweiligen Priorität durch einen Strich dargestellt. Dabei sind die Aufgabenprogramme in Prioritätsgruppen G1 - G5 eingeteilt. Die Prioritätsgruppe G1 besteht nur aus Aufgabenprogrammen, die alle die gleiche Prioritätsstufe 1 haben. Die Prioritätsgruppe G2 besteht aus den Aufgabenprogrammen, denen eine der Prioritätsstufen 2 - 6 zukommt. Die Prioritätsgruppe G3 besteht aus den Aufgabenprogrammen, denen die Prioritätsstufe 7 zukommt. Die Prioritätsgruppe G4 besteht aus den Aufgabenprogrammen, denen die Prioritätsstufe 8 zukommt. Die Prioritätsgruppe G5 betrifft alle Aufgabenprogramme, denen eine der Prioritätsstufen 9 - 11 zukommt. Für die Ablaufsteuerung bei dieser Einteilung der Aufgabenprogramme gilt dann das folgende: Ein Aufgabenprogramm der Prioritätsgruppe G2 kann ein niederpriores Aufgabenprogramm der gleichen Prioritätsgruppe G2 nur zwischen zwei abgeschlossenen Teilaufgabenprogrammen unterbrechen. Wenn also während der Abarbeitung eines Aufgabenprogramms aus der Prioritätsgruppe G2 die Anforderung eines Aufgabenprogramms aus der gleichen Prioritätsgruppe G2 erscheint, so wird das gerade rechnende Aufgabenprogramm nicht unmittelbar unterbrochen, sondern erst nachdem die Abarbeitung des rechnenden Teilaufgabenprogramms beendet ist. Wenn hingegen ein Aufgabenprogramm der Prioritätsgruppe G1 sich gerade im Zustand "Rechnen" befindet, und es erfolgt die Anforderung der Abarbeitung eines Aufgabenprogramms aus der Prioritätsgruppe G2, so wird das gerade rechnende Aufgabenprogramm unmittelbar (preemptiv) unterbrochen. Wenn z.B. ein Aufgabenprogramm der Prioritätsgruppe G2 sich im Zustand "Rechnen" befindet, und es erfolgt die Anforderung der Abarbeitung eines Aufgabenprogramms aus der Prioritätsgruppe G4, so wird das gerade rechnende Aufgabenprogramm wiederum unmittelbar unterbrochen. Ein höherpriores Aufgabenprogramm aus der Prioritätsgruppe G5 kann wiederum ein niedrigerpriores Aufgabenprogramm aus der gleichen Prioritätsgruppe G5 nicht unmittelbar unterbrechen, sondern nur zwischen abgeschlossenen Teilaufgabenprogrammen.

Die Figur 9b zeigt eine äquivalente Darstellung für die Figur 9a. Hier kommt einem Aufgabenprogramm nicht nur eine Prioritätsstufe zu, sondern ggf. auch noch eine Subprioritätsstufe. Für die Hauptprioritatsstufen 1, 3, 4 sind keine Subprioritäten mehr vorgesehen. Diese speziellen Fälle entsprechen einer "degenerierten" Prioritätsgruppe G1, G3, G4 mit nur einem Element.

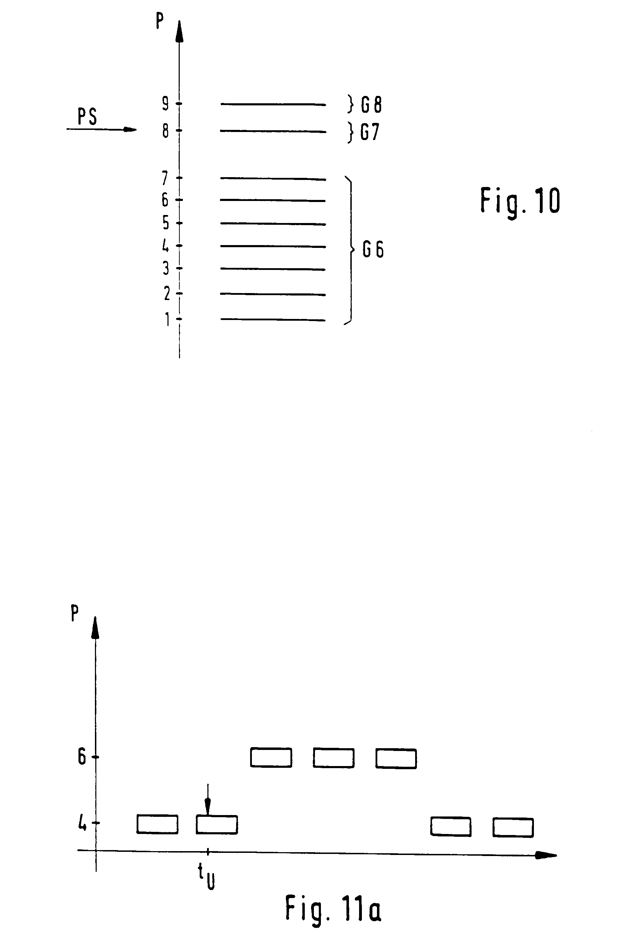

Die Figur 10 zeigt eine sehr praxisgerechte Aufteilung der Aufgabenprogramme eines typischen komplexen Steuerprogramms in Prioritätsgruppen. Die Prioritätsgruppe G6 besteht aus sämtlichen Aufgabenprogrammen der Prioritätsstufen 1 - 7. Es sind also in der Prioritätsgruppe G6 all die Aufgabenprogramme zusammengefaßt, an die gemäßigte bis geringe Echtzeitanforderungen gestellt werden. Aus diesem Grund weisen diese Aufgabenprogramme auch die niedrigsten Prioritäten auf. Alle Aufgabenprogramme mit sehr harten Echtzeitanforderungen und dementsprechend hohen Prioritäten sind dabei zu degenerierten Prioritätsgruppen G7 und G8 mit nur jeweils einer Prioritätsstufe zusammengefaßt. Es existiert bei dieser Darstellung ein Prioritätsschwellwert PS dergestalt, daß alle Aufgabenprogramme, deren Priorität gleich oder höher als dieser Schwellwert ist, andere niedrigerpriore Aufgabenprogramme an jeder beliebigen Stelle (preemptiv) unterbrechen dürfen. Dadurch, daß nur wenige Aufgabenprogramme die Erlaubnis haben, andere Aufgabenprogramme an jeder beliebigen Stelle (preemptiv) zu unterbrechen, wird der RAM-Bedarf für den Stapelspeicher und der Aufwand für die Aufgabenprogrammsynchronisation und Datenkonsistenzsicherung in einem erträglichen Maß gehalten.

Die gemischte Ablaufsteuerung für die Aufteilung der Aufgabenprogramme gemäß Figur 10 läßt sich in einem Betriebssystem für das Steuergerät so realisieren, daß das Ablaufsteuerungsverfahren, wie zu den Figuren 6 und 7 beschrieben, auf niedrigster Priorität eines aus dem Stand der Technik bekannten preemptiven Ablaufsteuerungssystems abläuft.

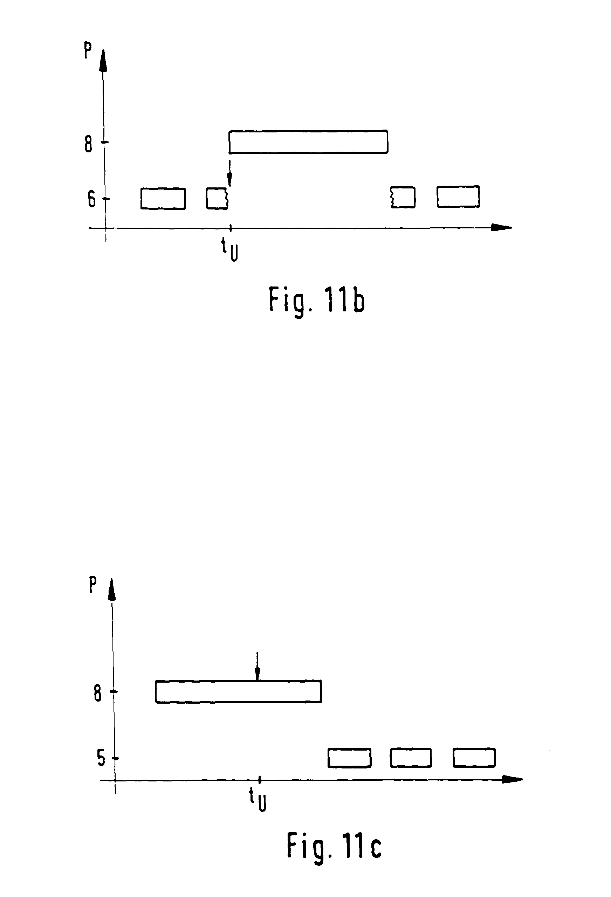

In Figur 11 sind drei mögliche Fälle von Unterbrechungsanforderungen in Verbindung mit der Aufteilung der Aufgabenprogramme gemäß Figur 10 dargestellt. In Figur 11a wird ein Aufgabenprogramm aus der Prioritätsgruppe G6 abgearbeitet. Dieses Aufgabenprogramm ist in Teilaufgabenprogramme eingeteilt. Zum Zeitpunkt t_{U} wird die Abarbeitung eines Aufgabenprogramms mit der Prioritätsstufe 6 angefordert. Dieses Aufgabenprogramm kann jedoch das gerade rechnende Aufgabenprogramm nicht unmittelbar unterbrechen, so daß erst das Teilaufgabenprogramm des rechnenden Aufgabenprogramms abgeschlossen wird, bevor das Aufgabenprogramm mit der Prioritätsstufe 6 zur Abarbeitung gelangt.

Figur 11b zeigt den Fall, daß gerade ein Aufgabenprogramm der Prioritätsstufe 6 abgearbeitet wird. Zum Zeitpunkt t_{U} ergeht die Anforderung für die Abarbeitung eines Aufgabenprogramms aus der Prioritätsstufe 8. Dieses Aufgabenprogramm unterbricht das gerade rechnende Aufgabenprogramm unmittelbar und gelangt sofort zur Abarbeitung. Das unterbrochene Teilaufgabenprogramm wird anschließend fortgeführt.

In Figur 11c ist der Fall betrachtet, daß ein Aufgabenprogramm der Prioritätsstufe 8 abgearbeitet wird. Zum Zeitpunkt t_{U} ergeht die Anforderung zur Abarbeitung eines Aufgabenprogramms mit der Prioritätsstufe 5. In diesem Fall findet keine Unterbrechung des rechnenden Aufgabenprogramms statt. Das rechnende Aufgabenprogramm wird erst vollständig abgearbeitet und danach gelangt das Aufgabenprogramm aus der Prioritätsgruppe G6 zur Abarbeitung.

Die Erfindung ist nicht auf das hier beschriebene Ausführungsbeispiel beschränkt. Sie ist insbesondere nicht auf Anwendungen in Kraftfahrzeug-Steuergeräten beschränkt. Ein entsprechend der Erfindung arbeitendes Betriebssystem kann z.B. auch in Rechenanlagen zur Prozeßsteuerung (z.B. chemische Prozesse), für Industriesteuerungsanlagen (Werkzeugmaschinen, Roboter, etc.) oder auch in Steuerungsanlagen für Haushaltsgeräte (Waschmaschinen, etc.) eingesetzt werden. Dabei ist der Einsatz des erfindungsgemäßen Verfahrens insbesondere immer dann vorteilhaft, wenn die Vorgänge oder Prozesse in Echtzeit gesteuert/geregelt werden sollen.

Die Einteilung des komplexen Steuerprogramms in eine Anzahl von Aufgabenprogrammen und die Einteilung der Aufgabenprogramme zumindest zum Teil in eine Anzahl von Teilaufgabenprogrammen ist von dem jeweiligen Anwendungsfall abhängig und kann in Art und Anzahl stark variieren.

Die Verwendung von Zeigern als Referenzen auf Datenobjekte ist für die Realisierung des erfindungsgemäßen Verfahrens nicht zwingend. Statt dessen können die Datenobjekte auch in Tabellen abgelegt werden, so daß als Referenz der Tabellenindex des Datenobjekts dienen kann.

## Patentansprüche

1. Verfahren zur Steuerung von technischen Vorgängen oder Prozessen, insbesondere im Kraftfahrzeug, wobei ein Steuerprogramm von einem Mikrorechner eines Steuergerätes abgearbeitet wird, wobei das Steuerprogramm in eine Anzahl von Aufgabenprogrammen eingeteilt ist, wobei Aufgabenprogrammen eine Priorität und ein Aktivierungsereignis zugeordnet wird, wobei die Abarbeitung eines Aufgabenprogramms aufgrund einer späteren Anforderung der Abarbeitung eines höherprioren Aufgabenprogramms unterbrochen wird und die Abarbeitung des unterbrochenen Aufgabenprogramms nach Beendigung der Abarbeitung des höherprioren Aufgabenprogramms fortgesetzt wird, wobei mindestens ein Aufgabenprogramm (A, B, C, D) in eine Folge von Teilaufgabenprogrammen (A1, A2, A3; B1, B2, B3; C1, C2, C3; D1, D2, D3) eingeteilt wird, wobei die Abarbeitung eines angeforderten höherprioren Aufgabenprogramms (A, B, C, D) erst dann begonnen wird, wenn die Abarbeitung des Teilaufgabenprogramms (A1, A2, A3; B1, B2, B3; C1, C2, C3; D1, D2, D3) währenddessen die Anforderung für die Abarbeitung des höherprioren Aufgabenprogramms (A, B, C, D) erging, vollständig zu Ende geführt ist, dadurch gekennzeichnet,
daß ein Tabellenzeiger (39) vorgesehen ist, der eine Information über das nächste abzuarbeitende Teilaufgabenprogramm (A1, A2, A3; B1, B2, B3; C1, C2, C3; D1, D2, D3) enthält, daß beim Eintreffen einer Anforderung für die Abarbeitung eines höherprioren Aufgabenprogramms (A, B, C, D) in den Tabellenzeiger (39) eine Information über das erste Teilaufgabenprogramm (A1, A2, A3; B1, B2, B3; C1, C2, C3; D1, D2, D3) des höherprioren Aufgabenprogramms (A, B, C, D) eingetragen wird, und daß nach Ende eines Teilaufgabenprogramms (A1, A2, A3; B1, B2, B3; C1, C2, C3; D1, D2, D3) die Abarbeitung des Steuerprogramms mit dem Teilaufgabenprogramm (A1, A2, A3; B1, B2, B3; C1, C2, C3; D1, D2, D3) fortgesetzt wird, zu dem Informationen im Tabellenzeiger (39) eingetragen sind.

2. Verfahren nach Anspruch 1, dadurch gekennzeichnet, daß die Folge von Teilaufgabenprogrammen (A1 bis D3) des mindestens einen Aufgabenprogramms (A bis D) nach Ablaufgesichtspunkten zusammengestellt wird, wobei als Ablaufgesichtspunkt der Anlaß der Anforderung auf Aufgabenprogrammabarbeitung, insbesondere Programmstart, Programmende, Ablauf einer Zeitperiode, Ablauf einer Winkelperiode, oder der Eintritt von externen oder internen Ereignissen, die damit verbundene Dringlichkeit sowie Synchronisationsbedingungen zwischen den Teilaufgabenprogrammen (A1 bis A3) berücksichtigt werden.

3. Verfahren nach Anspruch 1 oder 2, dadurch gekennzeichnet, daß jedes Teilaufgabenprogramm (A1 bis D3) nur so umfangreich gestaltet wird, daß die Zeit für seine Abarbeitung seitens des Mikrorechners (11) eine vorbestimmte Grenze nicht überschreitet.

4. Verfahren nach einem der vorhergehenden Ansprüche, dadurch gekennzeichnet, daß für das mindestens eine Aufabenprogramm (A bis D) mindestens eine Teilaufgabenprogrammzeigertabelle (31 bis 34) vorgesehen wird, in der für jedes Teilaufgabenprogramm (A1 bis D3) ein Teilaufgabenprogrammzeiger (ZA1 bis ZD3) vorgesehen wird, der auf den Anfang des ihm zugeordneten Teilaufgabenprogramms (A1 bis D3) zeigt, daß der Tabellenzeiger (39) in der Teilaufgabenprogrammzeigertabelle (31 bis 34) jeweils auf den Teilaufgabenprogrammzeiger (A1 bis D3) zeigt, der seinerseits auf das Teilaufgabenprogramm (A1 bis D3) zeigt, das zu diesem Zeitpunkt als das als nächstes abzuarbeitendes Teilaufgabenprogramm gilt, und daß der Tabellenzeiger (39) nach der Abarbeitung eines Teilaufgabenprogramms (A1 bis D3) um einen vorgebenen Wert inkrementiert wird, so daß er wiederum auf den Teilaufgabenprogrammzeiger (A1 bis D3) des Teilaufgabenprogramms (A1 bis D3) zeigt, das zu diesem Zeitpunkt als das als nächstes abzuarbeitendes Teilaufgabenprogramm gilt, daß ferner dasjenige Teilaufgabenprogramm (A1 bis D3) abgearbeitet wird, auf dessen Teilaufgabenprogrammzeiger (ZA1 bis ZD3) der Tabellenzeiger (39) vor der Inkrementierung zeigte.

5. Verfahren nach Anspruch 4, dadurch gekennzeichnet, daß der jeweils letzte Teilaufgabenprogrammzeiger (ZAE bis ZDE) einer Teilaufgabenprogrammzeigertabelle (31 bis 34) so ausgerichtet wird, daß er auf ein bestimmtes Teilaufgabenprogramm (AE) zeigt, während dessen Abarbeitung der Tabellenzeiger (39) wieder korrekt auf einen gültigen Teilaufgabenprogrammzeiger (ZA1 bis ZD2) ausgerichtet wird.

6. Verfahren nach einem der vorhergehenden Ansprüche, dadurch gekennzeichnet, daß dem mindestens einen Aufgabenprogramm (A bis D) eine beschreibende Datenstruktur (35 bis 38) zugeordnet wird, die die Priorität des Aufgabenprogramms (A bis D), einen Zeiger (ZZA1 bis ZZD1) auf den Beginn einer zugehörigen Teilaufgabenprogrammzeigertabelle (31 bis 34) und Informationen über den Abarbeitungsstatus des Aufgabenprogramms (A bis D) enthält und deren Adresse als Referenz und Identifizierer für das zugehörige Aufgabenprogramm (A bis D) dient.

7. Verfahren nach einem der vorhergehenden Ansprüche, dadurch gekennzeichnet, daß für ein Aufabenprogramm (A bis D) nur die drei Zustände "ruhend" (50), "rechenbereit" (51) und "rechnend" (52) vorgesehen werden.

8. Verfahren nach einem der vorhergehenden Ansprüche, dadurch gekennzeichnet, daß eine Ablaufsteuerungstabelle (40) zur Verwaltung der zur Abarbeitung angeforderten Aufgabenprogramme (A bis D) vorgesehen wird, die nach Prioritäten geordnet ist und Informationen über die in Abarbeitung befindlichen oder zur Abarbeitung angeforderten Aufgabenprogramme (A bis D) enthält, daß insbesondere in diese Ablaufsteuerungstabelle (40) für jede Priorität ein Zeiger (ZDA bis ZDD) auf die beschreibende Datenstruktur (35 bis 38) des auf dieser Prioritätsstufe zur Abarbeitung angeforderten Aufgabenprogramms (A bis D) und ein Zeiger (ZZA1 bis ZZD3) auf den Zeiger (ZA1 bis ZD3) der Teilaufgabenprogrammzeigertabelle (31 bis 34) aufgespeichert wird, der für das zur Abarbeitung angeforderte Aufgabenprogramm (A bis D) dieser Prioritätsstufe das Teilaufgabenprogramm (A1 bis D3) kennzeichnet, mit dem das zur Abarbeitung angeforderte Aufgabenprogramm (A bis D) bei einem späteren Aufgabenprogrammwechsel gestartet oder nach einer erfolgten Unterbrechung fortgesetzt werden soll und daß ferner Nullzeiger in die Ablaufsteuerungstabelle (40) eingetragen werden, wenn auf der entsprechenden Prioritätsstufe kein Aufgabenprogramm (A bis D) zur Abarbeitung angefordert ist.

9. Verfahren nach Anspruch 8, dadurch gekennzeichnet, daß bei jeder Anforderung zur Abarbeitung eines Aufgabenprogramms (A bis D), dessen Priorität kleiner ist als die Priorität des höchstprioren, zu diesem Zeitpunkt zur Abarbeitung angeforderten Aufgabenprogramms (A bis D), ein Zeiger (ZDA bis ZDD) auf die zu diesem Aufgabenprogramm (A bis D) gehörige beschreibende Datenstruktur (35 bis 38) sowie ein Zeiger (ZZA1 bis ZZD1) auf den Beginn der zugehörigen Teilaufgabenprogrammzeigertabelle (31 bis 34) in der Ablaufsteuerungstabelle (40) unter der zugehörigen Prioritätsstufe abgespeichert wird, daß bei jeder Anforderung zur Abarbeitung eines Aufgabenprogramms (B), dessen Priorität größer ist als die Priorität des höchstprioren, zu diesem Zeitpunkt (t₄) zur Abarbeitung angeforderten Aufgabenprogramms (A), der aktuelle Wert des Tabellenzeigers (39) in der Ablaufsteuerungstabelle (40) unter der entsprechenden Prioritätsstufe abgespeichert wird und daß ein Zeiger (ZDB) auf die zugehörige beschreibende Datenstruktur (36) und ein Zeiger (ZZB1) auf den Beginn der zugehörigen Teilaufgabenprogrammzeigertabelle (32) des zur Abarbeitung angeforderten Aufgabenprogramms (B) unter der entsprechenden Prioritätsstufe abgespeichert wird, daß der Tabellenzeiger (39) auf den ersten Zeiger (ZB1) der Teilaufgabenprogrammzeigertabelle (32) des zur Abarbeitung angeforderten Aufgabenprogramm (B) ausgerichtet wird, wodurch ein Aufgabenprogrammwechsel nach Abarbeitung des gerade rechnenden Teilaufgabenprogramms (A2) vorbereitet wird.

10. Verfahren nach Anspruch 9, dadurch gekennzeichnet, daß bei jeder Beendigung eines Aufgabenprogramms (C,B) die zugehörigen Einträge auf der betreffenen Prioritätsstufe in der Ablaufsteuerungstabelle (40) gelöscht und die Ablaufsteuerungstabelle (40) in Richtung absteigender Prioritäten nach dem nun höchstprioren Aufgabenprogramm (B,A) durchsucht wird und der Tabellenzeiger (39) mit dem in der Ablaufsteuerungstabelle (40) auf der neuen Prioritätsstufe eingetragenen Wert geladen und dadurch auf einen Teilaufgabenprogrammzeiger (ZB3, ZA3) der Teilaufgabenprogrammzeigertabelle (32, 33) des nun höchstprioren Aufgabenprogramms (B, A) ausgerichtet wird, wodurch dieses beim nächsten Teilaufgabenprogrammwechsel in den rechnenden Zustand (52) überführt wird.

11. Verfahren nach einem der Ansprüche 8 bis 10, dadurch gekennzeichnet, daß die Ablaufsteuerungstabelle (40) für jede Prioritätstufe um einen First-In-First-Out-Speicher erweitert wird, der es erlaubt, daß noch weitere Aufgabenprogramme (A bis D) einer Prioritätsstufe zur Abarbeitung angefordert werden können, wenn bereits ein Aufgabenprogramm (A bis D) gleicher Prioritätsstufe zur Abarbeitung angefordert ist, indem bei einer weiteren Anforderung zur Abarbeitung eines Aufgabenprogramms (A bis D) auf dieser Prioritätsstufe ein Zeiger (ZDA bis ZDD) auf die zugehörige beschreibende Datenstruktur (35 bis 38) in den First-In-First-Out-Speicher eingetragen wird, und bei Beendigung eines Aufgabenprogramms (A bis D) auf dieser Prioritätsstufe der Zeiger auf die beschreibende Datenstruktur (35 bis 38) des Aufgabenprogramms (A bis D) mit der längsten Wartezeit aus dem First-In-First-Out-Speicher entnommen, dort gelöscht, und in die Ablaufsteuerungstabelle (40) eingetragen wird und, daß das zugehörige Aufgabenprogramm (A bis D), sofern zwischenzeitlich keine Anforderung zur Abarbeitung eines höherprioren Aufgabenprogramms erging, beim nächsten Teilaufgabenprogrammwechsel in den rechnenden Zustand überführt wird, indem der Tabellenzeiger (39) auf den ersten Zeiger (ZA1 bis ZD1) der zu diesem Aufgabenprogramm (A bis D) gehörigen Teilaufgabenprogrammzeigertabelle (31 bis 34) ausgerichtet wird.

12. Verfahren nach einem der vorhergehenden Ansprüche, dadurch gekennzeichnet, daß in einem Aufgabenprogramm (A bis D) auch innerhalb eines ansonsten für andere Aufgabenprogramme (A bis D) nicht unterbrechbaren Teilaufgabenprogramms (A1 bis D3) eine Unterbrechungsstelle für andere Aufgabenprogramme (A bis D) geschaffen wird, indem an dieser Stelle ein für diesen Zweck eingerichtetes Betriebssystem-Unterprogramm aufgerufen wird, das die Abarbeitung angeforderter Aufgabenprogramme höherer Priorität veranlaßt und anschließend wieder in das unterbrochene Teilaufgabenprogramm zurückkehrt, wobei die temporären Daten des unterbrochenen Teilaufgabenprogramms (A1 bis D3) auf einem Stapelspeicher abgespeichert bleiben.

13. Verfahren nach Anspruch 12, dadurch gekennzeichnet, daß die Unterbrechungsstelle so eingerichtet wird, daß die Zeit für die Abarbeitung der durch das Betriebssystem-Unterprogramm separierten Teilstücke eines Teilaufgabenprogramms (A1 bis D3) die vorbestimmte Grenze nicht überschreitet.

14. Verfahren nach einem der vorhergehenden Ansprüche, dadurch gekennzeichnet, daß neben Aufgabenprogrammen (A bis D), die andere Aufgabenprogramme (A bis C) niedrigerer Priorität nur zwischen abgeschlossenen Teilaufgabenprogrammen (A1 bis C3) oder an den Unterbrechungsstellen gemäß Anspruch 12 unterbrechen können, auch eine bestimmte Anzahl von Aufgabenprogrammen (E bis H) so verwaltet wird, daß sie andere niedrigerpriore Aufgabenprogramme (A bis G) an beliebigen Stellen unterbrechen dürfen.

15. Verfahren nach Anspruch 14, dadurch gekennzeichnet, daß die Aufgabenprogramme zu sich nicht überschneidenden Prioritätsgruppen (G1 - G8) zusammengefaßt werden, wobei eine Prioritätsgruppe (G1 - G8) mindestens aus einem einzelnen Aufgabenprogramm oder einer Anzahl von Aufgabenprogrammen mit benachbarten Prioritätsstufen besteht und daß zur Ablaufsteuerung die folgenden Regeln eingehalten werden:
a) Ein Aufgabenprogramm einer Prioritätsgruppe (G2, G5, G6) darf ein anderes Aufgabenprogramm mit niedriger Priorität aus derselben Prioritätsgruppe (G2, G5, G6) nur zwischen zwei Teilaufgabenprogrammen und/oder an den gemäß Anspruch 12 eingefügten Unterbrechungsstellen unterbrechen,
b) ein Aufgabenprogramm einer Prioritätsgruppe (G2 - G8) darf ein anderes Aufgabenprogramm mit niedrigerer Priorität aus einer anderen Prioritätsgruppe (G1 - G7) an beliebiger Stelle unterbrechen,
c) ein Aufgabenprogramm einer Prioritätsgruppe (G1 - G8) darf ein Aufgabenprogramm derselben oder einer anderen Prioritätsgruppe (G1 - G8) mit höherer oder gleicher Priorität nicht unterbrechen.

16. Verfahren nach Anspruch 15, dadurch gekennzeichnet, daß die Aufteilung der Aufgabenprogramme in Prioritätsgruppen (G6 - G8) so erfolgt, daß alle Aufgabenprogramme, deren Priorität unterhalb eines vorgegebenen Prioritätsschwellwertes (PS) liegt, zu einer Prioritätsgruppe (G6) zusammengefaßt werden und alle anderen Aufgabenprogramme jeweils separate Prioritätsgruppen (G7, G8) mit nur einem oder mehreren Aufgabenprogrammen gleicher Prioritätsstufe bilden.

## Claims

1. Method for controlling technical operations or processes, especially in a motor vehicle, wherein a control program is executed by a microprocessor of a controller, the control program being divided into a number of tasks, wherein a priority and an activation event is allocated to tasks, wherein the execution of a task is interrupted due to a later request for the execution of a task with higher priority and the execution of the interrupted task is continued after the execution of the task with higher priority has ended, wherein at least one task (A, B, C, D) is divided into a sequence of subtasks (A1, A2, A3; B1, B2, B3; C1, C2, C3; D1, D2, D3), wherein the execution of a requested task (A, B, C, D) with higher priority is only begun if the execution of the subtask (Al, A2, A3; B1, B2, B3; C1, C2, C3; D1, D2, D3), during which the execution of the task (A, B, C, D) with higher priority was requested, has been ended completely, characterized in that a table pointer (39) is provided which contains information on the next subtask (A1, A2, A3; B1, B2, B3; C1, C2, C3; D1, D2, D3) to be executed, that on arrival of a request for the execution of a task (A, B, C, D) with higher priority, an information item on the first subtask (A1, A2, A3; B1, B2, B3; C1, C2, C3; D1, D2, D3) of the task (A, B, C, D) with higher priority is entered in the table pointer (39), and that after a subtask (A1, A2, A3; B1, B2, B3; C1, C2, C3; D1, D2, D3) has ended, the execution of the control program is continued with the subtask (A1, A2, A3; B1, B2, B3; C1, C2, C3; D1, D2, D3) for which information is entered in the table pointer (39).

2. Method according to Claim 1, characterized in that the sequence of subtasks (Al to D3) of the at least one task (A to D) is assembled in accordance with procedural aspects, the cause of the request for task execution, especially program start, program end, a time out, completion of an angular period or the entry of external or internal events, the associated urgency and synchronization conditions between the subtasks (A1 to A3) being taken into consideration as procedural aspect.

3. Method according to Claim 1 or 2, characterized in that each subtask (A1 to D3) is designed to have only such an extent that the time for its execution by the microprocessor (11) does not exceed a predetermined limit.

4. Method according to one of the preceding claims, characterized in that, for the at least one task (A to D), at least one subtask pointer table (31 to 34) is provided in which, for each subtask (A1 to D3), one subtask pointer (ZA1 to ZD3) is provided which points to the start of the task (A1 to D3) allocated to it, that the table pointer (39) in the subtask pointer table (31 to 34) in each case points to the subtask pointer (A1 to D3) which, in turn, points to the subtask (A1 to D3) which, at this time, is considered to be the next subtask to be executed, and that the table pointer (39) is incremented by a predetermined value after a subtask (A1 to D3) has been executed, so that it again points to the subtask pointer (A1 to D3) of the subtask (A1 to D3) which, at this time, is considered to be the next subtask to be executed, that furthermore the subtask (A1 to D3) to the subtask pointer (ZA1 to ZD3) of which the table pointer (39) pointed before the incrementation is executed.

5. Method according to Claim 4, characterized in that the in each case last subtask pointer (ZAE to ZDE) of a subtask pointer table (31 to 34) is aligned in such a manner that it points to a certain subtask (AE), during the execution of which the table pointer (39) is again aligned correctly with a valid subtask pointer (ZA1 to ZD2).

6. Method according to one of the preceding claims, characterized in that a descriptive data structure (35 to 38), which contains the priority of the task (A to D), a pointer (ZZA1 to ZZD1) to the beginning of an associated subtask pointer table (31 to 34) and information on the execution status of the task (A to D) and the address of which is used as reference and identifier for the associated task (A to D) is allocated to the at least one task (A to D).

7. Method according to one of the preceding claims, characterized in that only the three states "idle" (50), "processor ready" (51) and "processing" (52) are provided for a task (A to D).

8. Method according to one of the preceding claims, characterized in that a scheduling table (40) for managing the tasks (A to D) requested for execution is provided which is ordered in accordance with priorities and contains information on the tasks (A to D) being executed or requested for execution, that, especially in this scheduling table (40), for each priority, a pointer (ZDA to ZDD) to the descriptive data structure (35 to 38) of the task (A to D) requested for execution at this priority level and a pointer (ZZA1 to ZZD3) to the pointer (ZA1 to ZD3) of the task pointer table (31 to 34) is stored which identifies the subtask (Al to D3) for the task (A to D) requested for execution at this priority level, by means of which subtask the task (A to D) requested for execution is to be started during a later task change or after an interrupt has taken place and that, furthermore, zero pointers are entered in the scheduling table (40) if no task (A to D) is requested for execution at the corresponding priority level.

9. Method according to Claim 8, characterized in that, with each request for execution of a task (A to D), the priority of which is lower than the priority of the task (A to D) with the highest priority requested at this time for execution, a pointer (ZDA to ZDD) to the descriptive data structure (35 to 38) belonging to this task (A to D) and a pointer (ZZA1 to ZZD1) to the beginning of the associated subtask pointer table (31 to 34) is stored under the associated priority level in the scheduling table (40), that, with each request for execution of a task (B), the priority of which is higher than the priority of the task (A) with the highest priority requested at this time (t₄) for execution, the current value of the table pointer (39) is stored under the corresponding priority level in the scheduling table (40), and that a pointer (ZDB) to the associated descriptive data structure (36) and a pointer (ZZB1) to the beginning of the associated subtask pointer table (32) of the task (B) requested for execution is stored under the corresponding priority level, that the table pointer (39) is aligned with the first pointer (ZB1) of the subtask pointer table (32) of the task (B) requested for execution as a result of which a task change after execution of the subtask (A2) currently being processed is prepared.

10. Method according to Claim 9, characterized in that with each termination of a task (C,B), the associated entries are deleted at the relevant priority level in the scheduling table (40) and the scheduling table (40) is searched for the task (B, A) which now has the highest priority, in the direction of descending priorities, and the table pointer (39) is loaded with the value entered at the new priority level in the scheduling table (40) and, as a result, is aligned with a subtask pointer (ZB3, ZA3) of the subtask pointer table (32, 33) of the task (B, A) which now has the highest priority, as a result of which the latter is changed into the processing state (52) during the next subtask change.

11. Method according to one of Claims 8 to 10, characterized in that, for each priority level, the scheduling table (40) is expanded by a first-in-first-out store which allows further tasks (A to D) of a priority level to be requested for execution if a task (A to D) of the same priority level has already been requested for execution, in that, with a further request for execution of a task (A to D) at this priority level, a pointer (ZDA to ZDD) to the associated descriptive data structure (35 to 38) is entered in the first-in-first-out store, and when a task (A to D) at this priority level is terminated, the pointer to the descriptive data structure (35 to 38) of the task (A to D) with the longest waiting time is taken from the first-in-first-out store, is cleared there and is entered in the scheduling table (40) and that the associated task (A to D), if there has been no request for execution of a task with higher priority in the meantime, is changed into the processing state during the next subtask change in that the table pointer (39) is aligned with the first pointer (ZA1 to ZD1) of the subtask pointer table (31 to 34) belonging to this task (A to D).

12. Method according to one of the preceding claims, characterized in that in a task (A to D) a break point for other tasks (A to D) is created also within a subtask (A1 to D3) which normally cannot be interrupted by other tasks (A to D), in that, at this point, an operating system subroutine set up for this purpose is called up which initiates the execution of requested tasks of higher priority and then returns back into the interrupted subtask, the temporary data of the interrupted subtask (A1 to D3) remaining stored in a stack.

13. Method according to Claim 12, characterized in that the break point is set up in such a way that the time for the execution of the segments of a subtask (Al to D3) separated by the operating system subroutine does not exceed the predetermined limit.

14. Method according to one of the preceding claims, characterized in that, apart from tasks (A to D) which can interrupt other tasks (A to C) of lower priority only between completed subtasks (A1 to C3) or at the break points according to Claim 12, a certain number of tasks (E to H) is also managed in such a manner that they are allowed to interrupt other tasks (A to G) of lower priority at arbitrary points.

15. Method according to Claim 14, characterized in that the tasks are combined to form non-overlapping priority groups (G1 - G8), a priority group (G1 - G8) consisting at least of a single task or a number of tasks with adjacent priority levels and that the following rules are adhered to for the scheduling:
a) A task of a priority group (G2, G5, G6) may only interrupt another task with lower priority from the same priority group (G2, G5, G6) between two subtasks and/or at the break points inserted according to Claim 12,
b) a task of a priority group (G2 - G8) may interrupt another task with lower priority from another priority group (G1 - G7) at an arbitrary point,
c) a task of a priority group (G1 - G8) must not interrupt a task of the same priority group or another priority group (G1 - G8) having a higher or equal priority.

16. Method according to Claim 15, characterized in that the tasks are divided into priority groups (G6 - G8) in such a manner that all tasks, the priority of which is below a predetermined priority threshold (PS) are combined to form one priority group (G6) and all other tasks in each case form separate priority groups (G7, G8) with only one or more tasks of the same priority level.

## Revendications

1. Procédé de commande d'opérations techniques ou de procédés notamment dans des véhicules automobiles, selon lequel, un microcalculateur d'un appareil de commande traite un programme de commande,
- le programme de commande étant subdivisé en un certain nombre de programmes de tâches
- les programmes de tâches se voyant attribué une priorité et un événement d'activation,
- le traitement d'un programme de tâches étant interrompu par une requête ultérieure de traitement d'un programme de tâches de priorité plus élevée et le traitement du programme de tâches interrompu, se poursuivant après le traitement du programme de tâches de priorité plus élevée,
- au moins un programme de tâches (A, B, C, D) étant subdivisé en une suite de programmes partiels de tâches (1A, A2, A3 ; B1, B2, B3 ; C1, C2, C3 ; D1, D2, D3),
- le traitement d'un programme de tâches de priorité plus élevée, requis (A, B, C, D), ne commençant que si le traitement du programme de tâches partiel (1A, A2, A3 ; B1, B2, B3 ; C1, C2, C3 ; D1, D2, D3), pendant lequel est arrivée la requête de traitement du programme de tâches de priorité plus élevée (A, B, C, D), a été exécuté jusqu'à la fin,
caractérisé en ce que
- il est prévu un index de tableau (39) qui contient une information relative au programme de tâches, partiels suivant à traiter (1A, A2, A3 ; B1, B2, B3 ; C1, C2, C3 ; D1, D2, D3),
- et à l'arrivée d'une requête de traitement d'un programme de tâches de priorité plus élevée (A, B, C, D) dans l'afficheur de tableau (39), on enregistre une information concernant le premier programme de tâches partiel (1A, A2, A3 ; B1, B2, B3 ; C1, C2, C3 ; D1, D2, D3), du programme de tâches de priorité plus élevée (A, B, C, D), et
- à la fin d'un programme de tâches partiel (1A, A2, A3 ; B1, B2, B3 ; C1, C2, C3 ; D1, D2, D3), on poursuit le traitement du programme de commande avec le programme de tâches partiel (1A, A2, A3 ; B1, B2, B3 ; C1, C2, C3 ; D1, D2, D3), pour lequel on a enregistré les informations dans l'index de tableau (39).

2. Procédé selon la revendication 1,
caractérisé en ce que
la suite des programmes de tâches partiels (1A...D3), d'au moins un programme de tâches (A-D) est composé suivant les points de vue de déroulement,
et comme points de vue de déroulement on tient compte de l'occurrence d'une requête de traitement de programme de tâches notamment du programme de démarrage, de la fin de programme, du déroulement d'une période de temps, du déroulement d'une période angulaire ou de l'arrivée d'un élément externe ou interne pour tenir compte de l'urgence correspondante ainsi que des conditions de synchronisation entre les programmes de tâches partiels (A1-A3).

3. Procédé selon la revendication 1 ou 2,
caractérisé en ce que
chaque programme de tâches partiel (A1-D3) n'est développé que jusqu'à ce que le temps nécessaire à son traitement, du côté du microcalculateur (11), ne dépasse pas une limite prédéterminée.

4. Procédé selon l'une des revendications précédentes,
caractérisé en ce que
pour un programme de tâches (A-D), il est prévu au moins un tableau d'index de programmes de tâches partiels (31-34) dans lequel, pour chaque programme de tâches partiel (A1-D3), il est prévu un afficheur de programme de tâches partiel (ZA1-ZD3), qui indique le début du programme de tâches partiel qui lui est associé (A1-D3),
- l'index de tableau (39) indique dans le tableau d'afficheur de programme de tâches partiel (31-34), chaque fois l'index de programme de tâches partiel (A1-D3) qui indique de son côté le programme de tâches partiel (A1-D3) qui est valable à cet instant comme programme de tâches partiel devant être exécuté ensuite, et
- l'index de tableau (39) après le traitement d'un programme de tâches partiel (A1-D3), est incrémenté d'une valeur prédéterminée pour indiquer de nouveau l'index de programme de tâches partiel (A1-D3) du programme de tâches partiel (A1-D3), qui est valable à cet instant comme programme de tâches partiel suivant à traiter,
- et en outre on traite le programme de tâches partiel (A1-D3), vers lequel était dirigé l'index de programme de tâches partiel (ZA1-ZD3) de l'index de tableau (39) avant l'incrémentation.

5. Procédé selon la revendication 4,
caractérisé en ce que
chaque index de programme de tâches partiel, le dernier (ZAE-ZDE) d'un tableau d'index de programme de tâches partiel (31-34) est dirigé pour indiquer un certain programme de tâches partiel (AE) et pendant son traitement, l'index de tableau (39) est de nouveau aligné correctement sur un indicateur de programme de tâches partiel valable (ZA1-ZD2).

6. Procédé selon l'une des revendications précédentes,
caractérisé en ce qu'
on attribue à au moins un programme de tâches (A-D), une structure de données de description (35-38), qui contient la priorité du programme de tâches (A-D), un index (ZZA1-ZZD1) du début d'un tableau d'index de programme de tâches partiel correspondant (31-34) et les informations relatives à l'état de traitement du programme de tâches (A-D) et dont l'adresse sert de référence et d'identificateur du programme de tâches correspondant (A-D).

7. Procédé selon l'une des revendications précédentes,
caractérisé en ce que
pour un programme de tâches (A-D), il n'y a que trois états « repos » (50), « prêt pour le calcul » (51) et « calcul en cours » (52).

8. Procédé selon l'une des revendications précédentes,
caractérisé en ce qu'
il est prévu un tableau de commande de déroulement (40) pour gérer le traitement des programmes de tâches (A-D) requis, et qui sont ordonnés selon leur priorité, et contenant des informations relatives au programme de tâches (A-D) requis pour le traitement ou se trouvant en cours de traitement,
- et notamment ce tableau de commande de déroulement (40) contient pour chaque priorité, un index (ZDA-ZDD) de la structure de données (35-38) à décrire, du programme de tâches (A-D) requis pour le traitement par ce niveau de priorité, et un index (ZZA1-ZZD3) pour l'index (ZA1-ZD3) du tableau d'index de programme de tâche partiel (31-34), enregistré en mémoire, qui caractérise pour le programme de tâches (A-D), requis pour le traitement, ce niveau de priorité pour le programme de tâches partiel (A1-D3), avec lequel on démarre le programme de tâches (A-D) requis pour le traitement, lors du changement de programme de tâches ultérieur ou qui doit être poursuivi après une interruption, et lorsqu'en outre des index zéro sont enregistrés dans le tableau se commande de déroulement (40) si pour le niveau de priorité correspondant aucun programme de tâches (A-D) n'est requis pour être traité.

9. Procédé selon la revendication 8,
caractérisé en ce qu'
à chaque requête de traitement d'un programme de tâches (A-D), dont la priorité est inférieure à celle de la priorité la plus élevée du programme de tâches (A-D) requis à cet instant pour le traitement, un index (ZDA-ZDD) est enregistré dans la structure de données (35-38) de description correspondant à ce programme de tâches (A-D), ainsi qu'un index (ZZA1-ZZD1) pour le début du tableau d'index de programme de tâches partiel correspondant (31-34) est enregistré dans tableau de commande de déroulement (40) sous le niveau de priorité correspondant, et à chaque requête de traitement d'un programme de déroulement (B) dont la priorité est supérieure à la priorité la plus élevée du programme de tâches (A) requis à cet instant (t₄) traité, la valeur actuelle de l'index de tableau (39) est mise en mémoire dans le tableau de commande de déroulement (40) sous le niveau de priorité correspondant et,
- un index (ZDB) est mis en mémoire sur la structure de données de description correspondante (36) et un index (ZZB1) est mis sur le début du tableau d'index de programme de tâches partiel correspondant (32) du programme de tâches (B) requis pour le traitement, sous le niveau de priorité correspondant,
- l'index de tableau (39) est dirigé sur le premier index (ZB1) du tableau d'index de programme de tâches partiel (32) du programme de tâches (B) requis pour le traitement, pour ainsi préparer un changement de programme de tâches après le traitement du programme de tâches partiel (A2) en cours précisément de calcul.

10. Procédé selon la revendication 9,
caractérisé en ce qu'
à chaque fin de programme de tâches (C, B), les enregistrements correspondants du niveau de priorité concerné du tableau de commande de déroulement (40) sont effacés et le tableau de commande de déroulement (40) est examiné dans le sens des priorités décroissantes après le programme de tâches (B, A) qui présente maintenant la priorité la plus élevée, et l'index de tableau (39) est chargé avec la nouvelle valeur enregistrée du niveau de priorité dans le tableau de commande de déroulement (40), et ainsi est aligné sur un index de programme de tâches partiel (ZB3, ZA3) du tableau d'index de programme de tâches partiel (32, 33) du programme de tâches (B, A) qui présente maintenant la priorité la plus élevée,
- si bien que cela conduit à l'état de calcul (52) au cours du changement de programme de tâches partiel suivant.

11. Procédé selon l'une des revendications 8 à 10,
caractérisé en ce que
le tableau de commande de déroulement (40) est étendu pour chaque niveau de priorité, d'une mémoire First-In-First-Out (FIFO), qui permet de requérir encore d'autres programmes de tâches (A-D) d'un niveau de priorité pour le traitement, si déjà un programme de tâches (A-D) de même niveau de priorité a été requis pour le traitement, en ce que lors d'une requête suivante pour le traitement d'un programme de tâches (A-D), un index (ZDA-ZDD) pour ce niveau de priorité, est enregistré dans la structure de données de description correspondantes (35-38) dans la mémoire FIFO, et à la fin d'un programme de tâches (A-D), pour ce niveau de priorité, on efface l'index pour la structure de données de description (35-38) du programme de tâches (A-D) ayant le temps d'attente le plus long, pris dans la mémoire FIFO, et
- on enregistre dans le tableau de commande de déroulement (40) et,
- on fait passer le programme de tâches correspondant (A-D), dans la mesure où entre temps il n'y a pas eu de requête de traitement d'un programme de tâches de priorité plus élevée, lors du changement de programme de tâches partiel suivant passant à l'état de calcul, du fait que l'index de tableau (39) est aligné sur le premier index (ZA1-ZD1) des tableaux d'index de programme partiel (31-34) correspondant à ce programme de tâches (A-D).

12. Procédé selon l'une des revendications précédentes,
caractérisé en ce que
dans un programme de tâches (A-D), même à l'intérieur d'un programme de tâches partiel (A1-D3), que l'on ne peut interrompre pour d'autres programmes de tâches (A-D), on crée un point d'interruption pour d'autres programmes de tâches (A-D) en ce qu'à ce point on appelle un sous-programme du système de fonctionnement conçu à cet effet, qui produit le traitement de programme de tâches requis, de priorité plus élevée, puis revient au programme de tâches partiel interrompu, et les données temporaires du programme de tâches partiel interrompu (A1-D3) reste en mémoire dans une pile.

13. Procédé selon la revendication 12,
caractérisé en ce que
le point d'interruption est conçu pour que le temps de traitement de la partie d'un programme de tâches partiel (A1-D3) séparé par le sous-programme du système de fonctionnement, ne dépasse pas la limite prédéterminée.

14. Procédé selon l'une des revendications précédentes,
caractérisé en ce qu'
à côté du programme de tâches (A-D), on peut interrompre les autres programmes de tâches (A-C) de priorité inférieure seulement entre les programmes de tâches partiels, terminés (A1-C3) ou aux points d'interruption selon la revendication 12, en gérant un certain nombre de programmes de tâches (E-H) autorisés à interrompre à un endroit quelconque des programmes de tâches de priorité inférieure (A-G).

15. Procédé selon la revendication 14,
caractérisé en ce que
les programmes de tâches sont réunis en groupes de priorité (G1-G8) qui ne se chevauchent pas et un groupe de priorité (G1-G8) se compose d'au moins un programme de tâches distinct ou d'un nombre de programmes de tâches avec des niveaux de priorité voisins et la commande de déroulement respecte les règles suivantes :
a) un programme de tâches du groupe de priorité (G2, G5, G6) peut interrompre un autre programme de tâches de priorité inférieure appartenant au même groupe de priorité (G2, G5, G6), uniquement entre deux programmes de tâches partiels et/ou aux points d'interruption insérés suivant la revendication 12,
b) un programme de tâches d'un groupe de priorité (G2-G8) ne peut interrompre un autre programme de tâches de priorité inférieure appartenant à un autre groupe de priorités (G1-G7) à un endroit quelconque,
c) un programme de tâches d'un groupe de priorité (G1-G8) ne peut pas interrompre un programme de déroulement du même groupe de priorité (G1-G8) ou d'un autre groupe de priorité ayant une priorité plus élevée ou une priorité égale.

16. Procédé selon la revendication 15,
caractérisé en ce que
la répartition des programmes de tâches en groupes de priorité (G6-G8) se fait de façon que tous les programmes de tâches dont la priorité est inférieure à un seuil de priorité prédéterminé (PS), sont réunis en un groupe de priorité (G6) et tous les autres programmes de tâches forment chaque fois des groupes de priorité séparés (G7-G8) avec seulement un ou plusieurs programmes de tâches de même niveau de priorité.
